(19) Europäisches Patentamt
European Patent Office
Office européen des brevets

(11) **EP 4 730 902 A1**

(12) **EUROPEAN PATENT APPLICATION**
published in accordance with Art. 153(4) EPC

(43) Date of publication:
**22.04.2026 Bulletin 2026/17**

(21) Application number: **23961995.0**

(22) Date of filing: **22.12.2023**

(51) International Patent Classification (IPC):
***H04W 74/0836*** (2024.01)

(52) Cooperative Patent Classification (CPC):
**H04W 74/0836**

(86) International application number:
**PCT/CN2023/141193**

(87) International publication number:
**WO 2025/129673 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
- MA, Teng
  Dongguan, Guangdong 523860 (CN)
- ZHAO, Zhenshan
  Dongguan, Guangdong 523860 (CN)
- ZHANG, Shichang
  Dongguan, Guangdong 523860 (CN)
- WANG, Hao
  Dongguan, Guangdong 523860 (CN)

(74) Representative: **Taor, Simon Edward William et al
Venner Shipley LLP
200 Aldersgate
London EC1A 4HD (GB)**

(54) **CHANNEL ACCESS METHOD AND APPARATUS, TERMINAL, CHIP AND STORAGE MEDIUM**

(57)    Embodiments of the present application provide a channel access method. The method comprises: performing type-2 channel access on at least one first channel among a group of channels, wherein a channel access result obtained by performing type-2 channel access on the at least one first channel is used for determining whether the at least one first channel can be used for sending a sidelink synchronization signal block (S-SSB) in a first time slot, the group of channels are channels intended for sending the S-SSB in the first time slot, and the at least one first channel and the first time slot are contained in a channel occupancy time (COT). A channel listening duration is short in a type-2 channel access procedure, and therefore, type-2 channel access is performed on the at least one first channel contained in the COT, and on the basis of the channel access result, it is determined whether the at least one first channel can be used for sending the S-SSB, thereby being conductive to improving the probability that a first terminal successfully accesses the at least one first channel and sends the S-SSB on the at least one first channel, and further avoiding COT resource loss.

A first terminal performs Type2 channel access on at least one first channel in a set of channels, and a channel access result obtained by performing the Type2 channel access on the at least one first channel is used to determine whether the at least one first channel is available for transmitting S-SSB in a first slot; where the set of channels are channels scheduled for transmitting the S-SSB in the first slot, and the at least one first channel and the first slot are included in a COT

— S1901

**FIG. 19**

EP 4 730 902 A1

**Description**

TECHNICAL FIELD

Embodiments of the present application relate to the technical field of communication, and particularly relate to a channel access method and apparatus, a terminal, a chip, and a storage medium.

BACKGROUND

When a User Equipment (UE) transmits a sidelink synchronization signal block (S-SSB) on a plurality of channels, channel access may be performed on the plurality of channels using a type A (TypeA) or type B (TypeB) multi-channel access scheme. In the TypeA multi-channel access procedure, the UE needs to independently perform Type1 channel access on the plurality of channels, and if the access is successful on any one or more of the channels, the UE may transmit the S-SSB on the one or more channels. In the TypeB multi-channel access procedure, the UE may randomly select one channel from the plurality of channels to perfrom Type1 channel access, and perform Type2 channel access on the other channels. If the Typel channel access is successful, the UE may transmit the S-SSB on each channel where the channel access was successful. If the Type1 channel access fails, all of the plurality of channels are considered unavailable.

In some scenarios, other UEs may share a Channel Occupancy Time (COT) with the current UE before transmitting the S-SSB. If the current UE transmits the S-SSB on the channel(s) included in the COT, the COT resource can be prevented from being preempted by inter-system users.

However, neither of the above TypeA or TypeB multi-channel access schemes can effectively prevent COT resources from being preempted by inter-system users. For example, when the UE adopts the TypeA multi-channel access method, the UE needs to perform Type1 channel access on the channel(s) included in the COT. As the channel sensing time in the Type1 channel access procedure is long, the probability that the COT is preempted by inter-system users is high. For another example, when the UE adopts the TypeB multi-channel access method, if the UE performs Type 1 channel access on one of the channels included in the COT, since the channel sensing time in the Type1 channel access procedure is long, and whether other channels can be used for S-SSB transmission depends on the channel access result of the channel, the probability that the COT is preempted by inter-system users is also high.

SUMMARY

Embodiments of the present disclosure provide a channel access method and apparatus, a terminal, a chip, and a storage medium.

According to a first aspect, an embodiment of the present disclosure provides a channel access method, which is applied to a first terminal. The method includes the following operation. Type2 channel access is performed on at least one first channel in a set of channels. A channel access result obtained by performing the Type2 channel access on the at least one first channel is used to determine whether the at least one first channel is available for transmitting a sidelink synchronization signal block (S-SSB) in a first slot. The set of channels are channels scheduled for transmitting the S-SSB in the first slot, and the at least one first channel and the first slot are included in a channel occupancy time (COT).

According to a second aspect, an embodiment of the present disclosure provides a channel access apparatus. The apparatus includes a processing unit configured to perform Type2 channel access on at least one first channel in a set of channels. A channel access result obtained by performing the Type2 channel access on the at least one first channel is used to determine whether the at least one first channel is available for transmitting an S-SSB in a first slot. The set of channels are channels scheduled for transmitting the S-SSB in the first slot, and the at least one first channel and the first slot are included in a COT.

According to a third aspect, an embodiment of the present disclosure provides a terminal including a processor and a memory. The memory is configured for storing a computer program, and the processor is configured to call and run the computer program stored in the memory to perform the above-described channel access method.

According to a fourth aspect, an embodiment of the present disclosure provides a chip for implementing the channel access method described above. Specifically, the chip includes a processor. The processor is configured to call and run a computer program from a memory, to cause a device installed with the chip to perform the above-described channel access method.

According to a fifth aspect, an embodiment of the present disclosure provides a computer-readable storage medium for storing a computer program. The computer program causes a computer to perform the above-described channel access method.

According to a sixth aspect, an embodiment of the present disclosure provide a computer program product including computer program instructions. The computer program instructions cause a computer to perform the above-described channel access method.

According to a seventh aspect, an embodiment of the present disclosure provides a computer program. The computer program, when run on a computer, causes the computer to perform the above-described channel access method.

According to the above technical solutions, the first terminal may perform Type2 channel access on at least one first channel in a set of channels, and the obtained channel access result may be used to determine whether the at least one first channel is available for S-SSB transmission in the first time slot, where the set of channels are channels scheduled for S-SSB transmission in the first slot, and the at least one first channel and the first slot are included in the COT. Since the channel sensing duration in the Type2 channel access procedure is short, performing the Type2 channel access on at least one first channel included in the COT and determining whether the at least one first channel is available for transmitting the S-SSB based on the result of the channel access is beneficial to increasing the probability that the first terminal successfully accesses the at least one first channel and transmits the S-SSB on the at least one first channel, thereby facilitating to maintain occupancy of COT resources to avoid COT resource loss (e.g., preventing COT resources being preempted by users of different systems).

BRIEF DESCRIPTION OF THE DRAWINGS

The drawings described herein are adopted to provide a further understanding to the present disclosure and form a part of the present disclosure. Schematic embodiments of the present disclosure and descriptions thereof are adopted to explain the present disclosure and not intended to form improper limits to the present disclosure. In the drawings:

FIG. 1 is a schematic diagram of sidelink communication within network coverage according to an embodiment of the present disclosure.

FIG. 2 is a schematic diagram of sidelink communication within partial network coverage according to an embodiment of the present disclosure.

FIG. 3 is a schematic diagram of sidelink communication outside network coverage according to an embodiment of the present disclosure.

FIG. 4 is a schematic diagram of sidelink communication with a central control node according to an embodiment of the present disclosure.

FIG. 5 is a schematic diagram of a unicast transmission mode according to an embodiment of the present disclosure.

FIG. 6 is a schematic diagram of a multicast transmission mode according to an embodiment of the present disclosure.

FIG. 7 is a schematic diagram of a broadcast transmission mode according to an embodiment of the present disclosure.

FIG. 8 is a schematic diagram of a slot structure in a New Radio-Vehicle to Everything (NR-V2X) according to an embodiment of the present disclosure.

FIG. 9 is a schematic diagram illustrating changes in Orthogonal Frequency Division Multiplexing (OFDM) symbols available in slots in different transmissions of a PSSCH according to an embodiment of the present disclosure.

FIG. 10 is a schematic diagram of a mapping mode of a second-order sidelink control information (SCI) according to an embodiment of the present disclosure.

FIG. 11 is a schematic diagram of a time-frequency domain position of a physical sidelink control channel demodulation reference signal (PSCCH DMRS) according to an embodiment of the present disclosure.

FIG. 12 is a schematic diagram of time domain positions of four DMRS symbols when a physical sidelink shared channel (PSSCH) has 13 symbols according to an embodiment of the present disclosure.

FIG. 13 is a schematic diagram of a single-symbol DMRS frequency domain type 1 according to an embodiment of the present disclosure.

FIG. 14 is a schematic diagram of a time-frequency position of an SL channel state information reference signal (CSI-RS) according to an embodiment of the present disclosure.

FIG. 15 is a schematic diagram of an example of a channel occupancy time and a channel occupancy according to an embodiment of the present disclosure.

FIG. 16 is a schematic diagram of S-SSB time-frequency domain mapping according to an embodiment of the present disclosure.

FIG. 17 is a schematic diagram of channel access using a TypeA multi-channel access mode according to an embodiment of the present disclosure.

FIG. 18 is a schematic diagram of channel access using a TypeB multi-channel access mode according to an embodiment of the present disclosure.

FIG. 19 is a schematic flowchart of a channel access method according to an embodiment of the present disclosure.

FIG. 20 is a first schematic diagram of implementation of a channel access method according to an embodiment of the present disclosure.

FIG. 21 is a second schematic diagram of implementation of a channel access method according to an embodiment of the present disclosure.

FIG. 22 is a third schematic diagram of implementation of a channel access method according to an embodiment of the present disclosure.

FIG. 23 is a schematic diagram of structure and composition of a channel access apparatus according to an embodiment of the present disclosure.

FIG. 24 is a schematic structural diagram of a communication device according to an embodiment of the present disclosure.

FIG. 25 is a schematic structural diagram of a chip according to an embodiment of the present disclosure.

## DETAILED DESCRIPTION

The technical solutions in the embodiments of the present disclosure will be described below with reference to the accompanying drawings in the embodiments of the present disclosure. It is apparent that the described embodiments are not all embodiments but only part of embodiments of the present disclosure. All other embodiments obtained by those of ordinary skill in the art on the basis of the embodiments in the present disclosure without creative work shall fall within the scope of protection of the present disclosure.

The technical solutions of the embodiments of the present disclosure can be applied to various sidelink communication systems. In order to facilitate understanding of the technical solutions of the embodiments of the present disclosure, the related technologies of the embodiments of the present disclosure will be described below. The related technologies as alternative solutions can be arbitrarily combined with the technical solutions of the embodiments of the present disclosure, and shall fall within the scope of protection of the embodiments of the present disclosure.

1. Sidelink communication in different network coverage environments

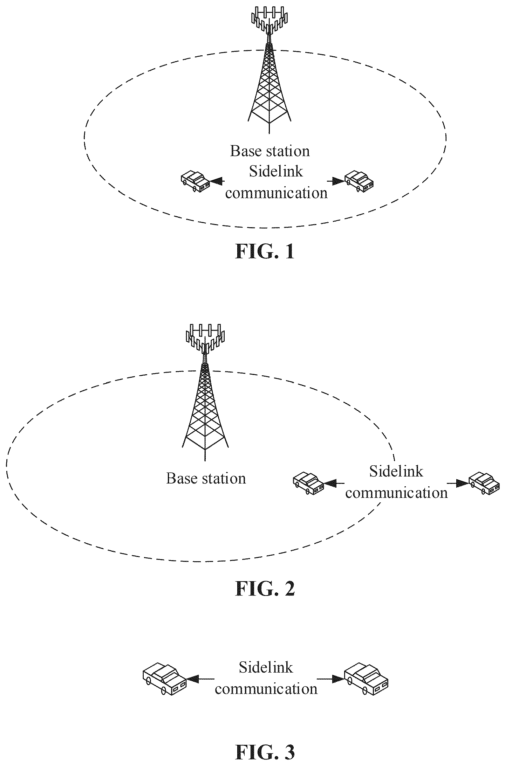

In sidelink communication, according to the network coverage for the terminal performing communication, the sidelink communication may be divided into sidelink communication within network coverage, sidelink communication within partial network coverage, sidelink communication outside network coverage, and sidelink communication with a central control node, which are as illustrated in FIG. 1, FIG. 2, FIG. 3, and FIG. 4 respectively.

As illustrated in FIG. 1, in the sidelink communication within network coverage, all terminals performing the sidelink communication are within the coverage range of the same base station, and thus, the terminals can perform the sidelink communication based on the same sidelink configuration by receiving configuration signaling of the base station.

As illustrated in FIG. 2, in the sidelink communication within partial network coverage, some terminals performing sidelink communication are located within the coverage range of the base station, and these terminals can receive configuration signaling of the base station, and perform sidelink communication according to the configuration of the base station. However, a terminal outside the network coverage cannot receive the configuration signaling of the base station. In this case, the terminal outside the network coverage determines the sidelink configuration according to pre-configuration information and information carried in the physical sidelink broadcast channel (PSBCH) transmitted by the terminal within the network coverage, so as to perform sidelink communication.

As illustrated in FIG. 3, for sidelink communication outside the network coverage, all terminals that perform sidelink communication are located outside the network coverage, and all terminals determine sidelink configuration according to pre-configuration information and perform sidelink communication.

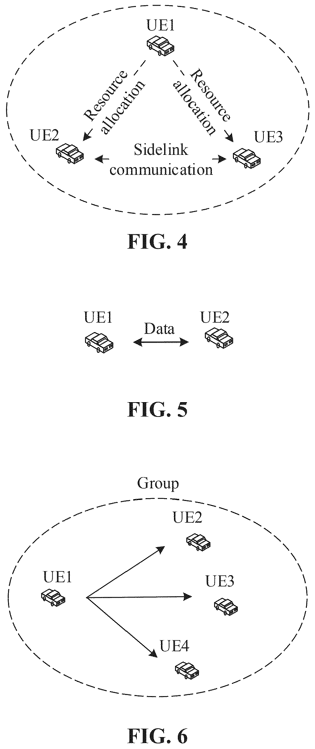

As illustrated in FIG. 4, for sidelink communication with a central control node, multiple terminals form a communication group, and the communication group has a central control node, such as user equipment 1 (UE1) in FIG. 4. The central control node may also be called a Cluster Header (CH). The central control node has, but is not limited to, at least one of the following functions: responsible for establishment of a communication group; managing joining and leaving of a group member; performing resource coordination, allocating sidelink transmission resources for other terminals, and receiving sidelink feedback information from other terminals; coordinating resources with other communication groups.

2. Device to Device (D2D)/Vehicle to Everything (V2X)

Device-to-device communication is a sidelink transmission technology based on D2D. Different from the traditional cellular system in which communication data is received or sent through a base station, so the D2D communication has higher spectral efficiency and lower transmission delay. The Internet of Vehicles system adopts terminal-to-terminal direct communication. The 3rd Generation Partnership Project (3GPP) defines two transmission modes: the first mode and the second mode.

In the first mode, transmission resources of a terminal are allocated by a base station, and the terminal transmits data on the sidelink according to the resources allocated by the base station. The base station may allocate resources for a single transmission to the terminal, or may allocate resources for a semi-static transmission to the terminal. As illustrated in FIG. 1, the terminal is located within the network coverage, and the network allocates transmission resources used for sidelink transmission to the terminal.

In the second mode, a terminal selects a resource in the resource pool for data transmission. As illustrated in FIG. 3, the terminal is located outside the coverage range of the cell, and the terminal autonomously selects a transmission resource from the pre-configured resource pool for side transmission; or, as illustrated in FIG. 1, the terminal autonomously selects a transmission resource from the resource pool configured by the network to perform sidelink transmission.

3. New Radio-Vehicle to Everything (NR-V2X)

In NR-V2X, autonomous driving needs to be supported, so higher requirements are put forward for data interaction between vehicles, such as higher throughput, lower latency, higher reliability, larger coverage, more flexible resource allocation, etc.

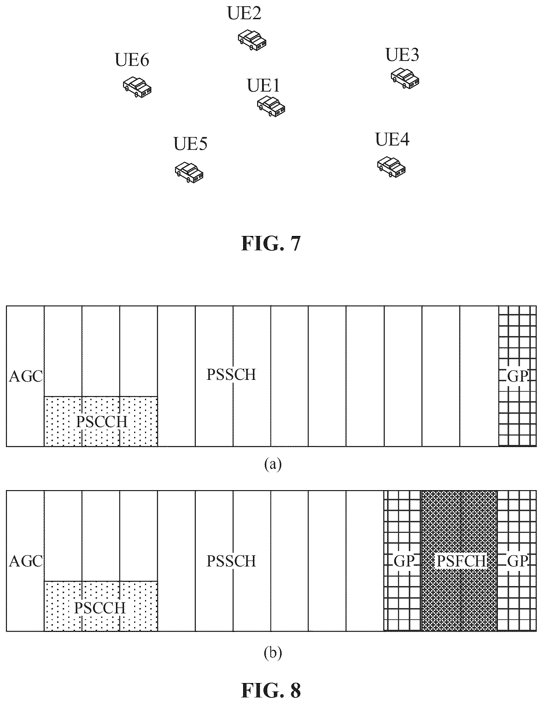

In LTE-V2X, broadcast transmission mode is supported, and in NR-V2X, unicast and multicast transmission modes are introduced. For unicast transmission, there is only one terminal at the receiving end. As illustrated in FIG. 5, unicast transmission is performed between UE1 and UE2. For multicast transmission, the receiving end is all terminals in a communication group or all terminals within a certain transmission distance. As illustrated in FIG. 6, UE1, UE2, UE3 and UE4 form a communication group, in which UE1 transmits data, and other terminal devices in the group are receiving terminals. For the broadcast transmission mode, the receiving end is any terminal around the transmitting terminal. As illustrated in FIG. 7, UE1 is the transmitting terminal, and other terminals around UE1, i.e. UE2 to UE6, are all receiving terminals.

4. System frame structure in NR-V2X

The slot structure in NR-V2X is illustrated in FIG. 8.

(a) of FIG. 8 is a schematic diagram of a slot structure excluding a Physical Sidelink Feedback Channel (PSFCH) in the slot; and (b) of FIG. 8 is a schematic diagram of a slot structure including a PSFCH channel.

A Physical Sidelink Control Channel (PSCCH) in NR-V2X occupies 2 or 3 Orthogonal Frequency Division Multiplexing (OFDM) symbols starting from the second sidelink symbol of the slot in the time domain, and occupies {10, 12, 15, 20, 25} physical resource blocks (PRB) in the frequency domain. In order to reduce the complexity of blind detection of PSCCH by UE, only one configuration of the number of PSCCH symbols and the number of PRBs are allowed in a resource pool. In addition, since the sub-channel is the minimum granularity of Physical Sidelink Shared Channel (PSSCH) resource allocation in NR-V2X, the number of PRBs occupied by the PSCCH must be less than or equal to the number of PRBs included in one sub-channel in the resource pool, so as to avoid additional restrictions on PSSCH resource selection or allocation. The PSSCH also starts from the second sidelink symbol of the slot in the time domain, the last time domain symbol in the slot is a Guard Period (GP) symbol, and the remaining symbols are mapped to the PSSCH. The first sidelink symbol in this slot is a repetition of the second sidelink symbol; typically, the receiving terminal uses the first sidelink symbol as an Automatic Gain Control (AGC) symbol, and the data on this symbol is usually not used for data demodulation. The PSSCH occupies K sub-channels in the frequency domain, and each sub-channel includes N consecutive PRBs.

When a PSFCH channel is included in a slot, the second-to-last symbol and the third-to-last symbol in the slot are used for PSFCH channel transmission, and a time domain symbol before the PSFCH channel is used as the GP symbol, as illustrated in (b) of FIG. 8.

5. Sidelink PSSCH

In NR-V2X, the PSSCH is used to carry second-order Sidelink Control Information (SCI 2-A or SCI 2-B) and data information. The second-order SCI adopts Polar coding method and fixedly adopts Quadrature Phase Shift Keying (QPSK) modulation. The data part of PSSCH uses Low Density Parity Check (LDPC) coding, and supports the highest modulation order of 256QAM.

In NR-V2X, PSSCH supports at most two streams, and uses a unit precoding matrix to map data on two layers to two antenna ports, and only at most one Transport Block (TB) can be transmitted in one PSSCH. However, unlike the transmission mode for the data part of the PSSCH, when the PSSCH adopts the dual-stream transmission mode, the modulation symbols transmitted by the second-order SCI on the two streams are exactly the same. Such design can ensure the reception performance of the second-order SCI in the high-correlation channel.

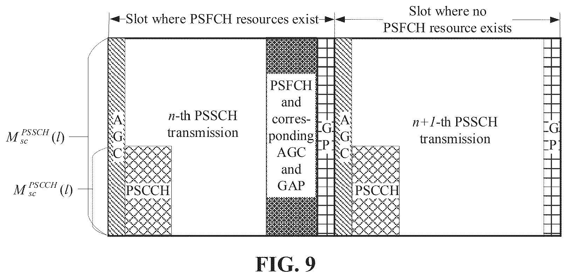

Since the maximum number of retransmissions of one PSSCH in NR-V2X is 32 times, if a PSFCH resource exists in the resource pool and the configuration period of the PSFCH resource is 2 or 4, the available OFDM symbols within the slot where different transmissions of one PSSCH are located may change, as illustrated in FIG. 9. If $N_{symbol}^{PSSCH}$ is calculated according to the actual number of OFDM symbols in a slot, $Q'_{SCI2}$ may be different due to the difference in the number of symbols available for PSSCH transmission in a slot, and the change in $Q'_{SCI2}$ may cause the change in the size of the TB carried by the PSSCH. In order to ensure that the Transmission Block Size (TBS) remains unchanged during multiple PSSCH transmissions, the actual number of PSFCH symbols is not used when calculating $N_{symbol}^{PSSCH}$. In addition, when calculating $M_{sc}^{SCI2}(l)$, the number of Resource Elements (REs) occupied by the PSSCH demodulation reference signal (DMRS) and the number of REs occupied by the Phase-Tracking Reference Signal (PT-RS), which may change during the retransmission process, are also not taken into account.

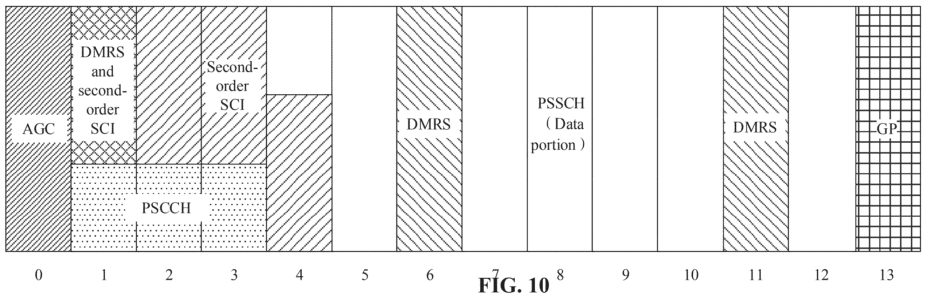

The code rate of the second-order SCI may be dynamically adjusted within a certain range, and the specific code rate used is indicated by the first-order SCI. Therefore, the receiving end does not need to perform blind detection on the second-order SCI even after the code rate changes. The modulation symbols of the second-order SCI are mapped from the symbol in which the first PSSCH DMRS is located in the frequency-domain first and time-domain second mode, and on OFDM symbols in which the DMRS is located, the second-order SCI is mapped to the RE not occupied by the DMRS, as illustrated in FIG. 10.

In a resource pool, the data portion of the PSSCH may use a plurality of different Modulation and Coding Scheme (MCS) tables, including a conventional 64QAM MCS table, 256QAM MCS table, and low spectral efficiency 64QAM MCS table, and the MCS table specifically used in one transmission is indicated by the "MCS table indicator" field in the first-order SCI. In order to control the Peak to Average Power Ratio (PAPR), the PSSCH must be transmitted using continuous PRBs; and since the subchannel is the minimum frequency domain resource granularity for the PSSCH, this requires that the PSSCH must occupy continuous subchannels.

6. Sidelink transmission block size

The PSSCH follows the transmission block size (TBS) determination mechanism of the Physical Downlink Shared Channel (PDSCH) and the Physical Uplink Shared Channel (PUSCH) in New Radio (NR), that is, the TBS is determined according to the reference value of the number of REs used for the PSSCH in the slot where the PSSCH is located, so that the actual code rate is as close as possible to the target code rate. The purpose of using the reference value of the number of REs instead of the actual number of REs is to ensure that the number of REs used to determine the TBS in the PSSCH retransmission process remains unchanged, so that the determined TBS is the same. To achieve this purpose, the reference value $N_{RE}$ of the number of REs occupied by PSSCH in the TBS determination process is determined according to formula (1):

$$N_{RE} = N'_{RE} \cdot n_{PRB} - N_{RE}^{SCI,1} - N_{RE}^{SCI,2} \qquad (1)$$

where $n_{PRB}$ is the number of PRBs occupied by the PSSCH, $N_{RE}^{SCI,1}$ is the number of REs occupied by the first-order SCI (including REs occupied by the DMRS of the PSCCH), $N_{RE}^{SCI,2}$ is the number of REs occupied by the second-order SCI, and $N'_{RE}$ represents the number of reference REs available for the PSSCH in one PRB, which is determined by formula (2):

$$N'_{RE} = N_{sc}^{RB}\left(N_{symb}^{sh} - N_{symb}^{PSFCH}\right) - N_{oh}^{PRB} - N_{RE}^{DMRS} \qquad (2)$$

where $N_{sc}^{RB} = 12$ represents the number of subcarriers in one PRB, $N_{symb}^{sh}$ represents the number of symbols available for sidelink in one slot, excluding the last GP symbol and the first symbol for AGC. $N_{symb}^{PSFCH} = 0$ or 3, $N_{symb}^{PSFCH}$ has the specific value indicated by the "PSFCH symbol number" field in the first-order SCI, and is a reference value of the number of symbols occupied by the PSFCH. The value of $N_{oh}^{PRB}$ is configured by a Radio Resource Control (RRC) layer parameter, and is used to represent a reference value of the number of REs occupied by PT-RS and CSI-RS. $N_{RE}^{DMRS}$ represents the average number of DMRS REs in a slot, and is related to the allowed DMRS pattern in the resource pool, as illustrated in Table 1.

Table 1

| Correspondence between allowed DMRS patterns and $N_{RE}^{DMRS}$ in resource pool | |
|---|---|
| DMRS pattern | $N_{RE}^{DMRS}$ |
| {2} | 12 |
| {3} | 18 |
| {4} | 24 |
| {2,3} | 15 |
| {2,4} | 18 |
| {3,4} | 21 |
| {2,3,4} | 18 |

7. Sidelink DMRS

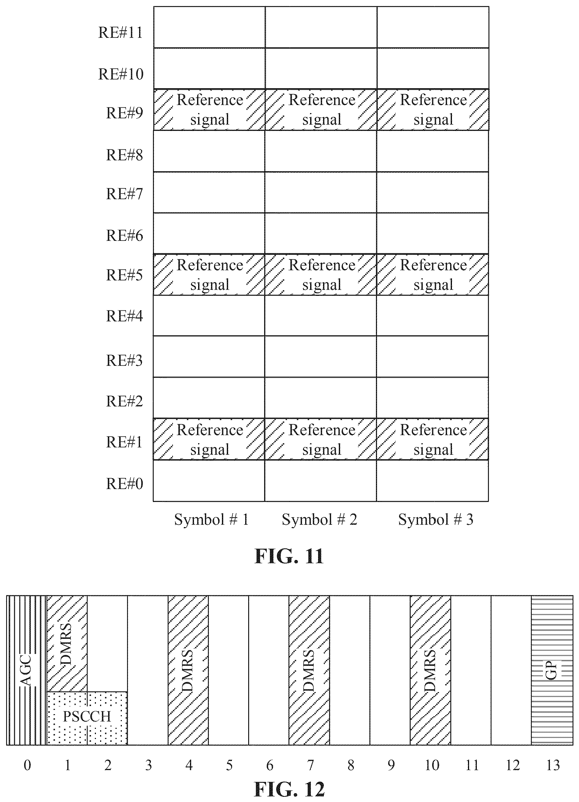

In NR-V2X, the DMRS pattern of the PSCCH is the same as that of the NR Physical Downlink Control Channel (PDCCH), that is, the DMRS exists on each OFDM symbol of the PSCCH, and occupies REs {#1, #5, #9} of one PRB in the frequency domain, as illustrated in FIG. 11. The DMRS sequence of PSCCH is generated by formula (3):

$$r_l(m) = \frac{1}{\sqrt{2}}\left(1 - 2c(m)\right) + j\frac{1}{\sqrt{2}}\left(1 - 2c(m+1)\right) \qquad (3)$$

The pseudo-random sequence $c(m)$ is initialized by $c_{\text{init}} = \left(2^{17}\left(N_{\text{symb}}^{\text{slot}} n_{s,f}^{\mu} + l + 1\right)\left(2N_{\text{ID}} + 1\right) + 2N_{\text{ID}}\right) \bmod 2^{31}$, where $l$ is the index of the OFDM symbol in the slot where the DMRS is located, $n_{s,f}^{\mu}$ is the index of the slot where the DMRS is located in the system frame, $N_{\text{symb}}^{\text{slot}}$ represents the number of OFDM symbols in a slot, and $N_{\text{ID}} \in \{0,1,\cdots,65535\}$, the specific value of $N_{\text{ID}}$ in a resource pool is preconfigured or configured by the network.

The NR-V2X draws on the design in the NR Uu interface and adopts multiple time-domain PSSCH DMRS patterns. In a resource pool, the number of available DMRS patterns is related to the number of PSSCH symbols in the resource pool. For a specific number of PSSCH symbols (including the first AGC symbol) and PSCCH symbols, the available DMRS patterns and the position of each DMRS symbol in the pattern are illustrated in Table 2. FIG. 12 illustrates a schematic diagram of time domain positions of four DMRS symbols when the PSSCH has 13 symbols.

Table 2 DMRS symbol number and position under different PSSCH and PSCCH symbols

| Number of PSSCH symbols (including first AGC symbol) | DMRS symbol position (relative to the first AGC symbol position) | | | | | |
|---|---|---|---|---|---|---|
| | Number of PSCCH symbols being 2 | | | Number of PSCCH symbols being 3 | | |
| | DMRS Symbol Number | | | DMRS Symbol Number | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

If a plurality of time domain DMRS patterns are configured in the resource pool, the specific time domain DMRS pattern is selected by the transmitting UE and indicated in the first-order SCI. Such design allows a high-speed moving UE to select a high-density DMRS pattern, thereby ensuring the accuracy of channel estimation, while for a low-speed moving UE, a low-density DMRS pattern can be adopted, thereby improving spectral efficiency.

The generation method of the PSSCH DMRS sequence is almost exactly the same as that of the PSCCH DMRS sequence. The only difference is that in the initialization formula $c_{init}$ of the pseudo-random sequence $c(m)$,

$$N_{ID} = \sum_{i=0}^{L-1} p_i \cdot 2^{L-1-i}$$ , $p_i$ is the i-th Cyclic Redundancy Check (CRC) of the PSCCH scheduling the PSSCH, and L = 24 is the number of bits of the PSCCH CRC.

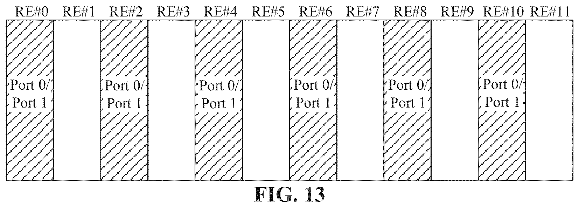

Two frequency domain DMRS patterns, i.e., DMRS frequency domain type 1 and DMRS frequency domain type 2, are supported in the NR PDSCH and PUSCH, and for each frequency domain type, there are two different types: single DMRS symbol and dual DMRS symbol. Single-symbol DMRS frequency domain type 1 supports 4 DMRS ports, and single-symbol DMRS frequency domain type 2 can support 6 DMRS ports. In the case of dual DMRS symbols, the number of supported ports is doubled for both. However, in NR-V2X, since the PSSCH only needs to support two DMRS ports at most, only the single-symbol DMRS frequency domain type 1 is supported, as illustrated in FIG. 13.

8. Sidelink Channel State Information Reference Signal (CSI-RS)

In order to better support unicast communication, SL CSI-RS is supported in NR-V2X. The SL CSI-RS will be transmitted only when the three conditions are met:

1) UE transmits the corresponding PSSCH, that is, the UE cannot transmit only the SL CSI-RS;
2) Higher layer signaling activates sidelink CSI reporting;
3) When the higher layer signaling activates sidelink CSI reporting, the corresponding bit in the second-order SCI transmitted by the UE triggers the sidelink CSI reporting.

The maximum number of ports supported by SL CSI-RS is 2. When there are two ports, SL CSI-RSs from different ports are multiplexed on two adjacent REs of the same OFDM symbol by code division. The number of SL CSI-RS per port in one PRB is 1, that is, the density is 1. Therefore, in one PRB, the SL CSI-RS only appears on at most one OFDM symbol, and the specific location of the OFDM symbol is determined by the transmitting terminal. In order to avoid affecting the resource mapping of the PSCCH and the second-order SCI, the SL CSI-RS cannot be located in the same OFDM symbol as the PSCCH and the second-order SCI. Since the channel estimation accuracy of the OFDM symbol where the PSSCH DMRS is located is high, and the SL CSI-RSs of the two ports will occupy two consecutive REs in the frequency domain, the SL CSI-RS cannot be transmitted on the same OFDM symbol as the PSSCH DMRS. The position of the OFDM symbol in which the SL CSI-RS is located is indicated by the parameter *sl-CSI-RS-FirstSymbol* in PC5 RRC.

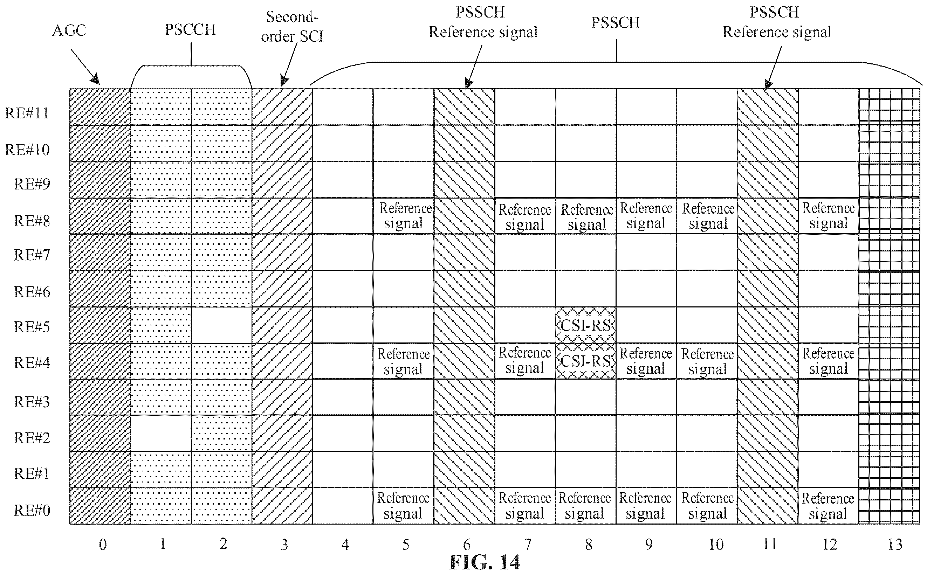

The position of the first RE occupied by the SL CSI-RS within a PRB is indicated by the parameter *sl-CSI-RS-FreqAllocation* in the PC5 RRC. If the SL CSI-RS is configured with a single port, this parameter is a 12-bit bitmap corresponding to 12 REs within a PRB. If the SL CSI-RS is configured with two ports, this parameter is a 6-bit bitmap; in this case, SL CSI-RS occupies two REs $2f(1)$ and $2f(1)+1$, where $f(1)$ represents the index of the bit of value 1 in the above bitmap. The frequency domain position of the SL CSI-RS is also determined by the transmitting terminal, but the determined frequency domain position of the SL CSI-RS cannot conflict with the PT-RS. FIG. 14 illustrates a schematic diagram of a time-frequency position of an SL CSI-RS. In FIG. 14, the port number of SL CSI-RS is 2, *sl-CSI-RS-FirstSymbol* is 8, and *sl-CSI-RS-FreqAllocation* is $[b_5,b_4,b_3,b_2,b_1,b_0] = [0,0,0,1,0,0]$.

9. 5G unlicensed spectrum communication (NR-unlicensed, NR-U)

The NR system introduced by the 3GPP R15 standard is a communication technology for use on existing and new licensed spectrum. NR systems can achieve seamless coverage of cellular networks, high spectral efficiency, high peak rates, and high reliability. In Long Term Evolution (LTE) systems, the use of unlicensed spectrum (or licensed-exempt spectrum) as a supplementary band to licensed spectrum for cellular networks has been implemented. Similarly, NR systems can also use unlicensed spectrum as part of 5G cellular network technology to provide services to users. In the 3GPP R16 standard, the NR system used on unlicensed spectrum, called NR-unlicensed (NR-U), was discussed.

The NR-U system supports two networking modes: licensed spectrum assisted access and unlicensed spectrum independent access. The former requires the assistance of licensed spectrum to access the network, with unlicensed spectrum serving as a secondary carrier. The latter may be independently networked through unlicensed spectrum, and the UE can directly access the network through the unlicensed spectrum. The range of unlicensed spectrum used by the NR-U system introduced in 3GPP R16 is concentrated on 5 GHz and 6 GHz bands, such as 5925-7125 MHz in the United States, or 5925-6425 MHz in Europe. In the R16 standard, Band 46 (5150 MHz-5925 MHz) is newly defined as unlicensed spectrum.

Unlicensed spectrum is the spectrum divided by countries and regions that can be used for radio device communications. This spectrum is generally considered to be shared spectrum, that is, a communication device can use this spectrum as long as the communication device meets the regulatory requirements set by the country or region on this spectrum, without the need to apply for a proprietary spectrum authorization from the exclusive spectrum management agency of the country or region. Since the use of unlicensed spectrum needs to meet the specific regulatory requirements in each country and region, for example, communication devices follow the principle of "Listen Before Talk (LBT)" when using unlicensed spectrum, NR technology requires corresponding enhancements to adapt to the regulatory requirements of unlicensed spectrum while efficiently utilizing the unlicensed spectrum to provide services. In the 3GPP R16 standard, the standardization of NR-U technology in the following aspects was mainly completed: channel monitoring process; an initial access procedure; control channel design; Hybrid Automatic Repeat reQuest (HARQ) and scheduling; grant-free transmission, etc.

10. Channel monitoring: LBT

In order to allow various communication systems using unlicensed spectrum for wireless communication to coexist on this spectrum, some countries or regions stipulate regulatory requirements that must be met when using unlicensed spectrum. For example, according to European regulations, when using unlicensed spectrum for communication, the communication device follows the "LBT" principle, that is, the communication device needs to perform LBT, or channel monitoring, before using the channel on the unlicensed spectrum for signal transmission. Only when the channel monitoring result is that the channel is idle or the LBT is successful, the communication device can transmit signals through the channel. If the channel monitoring result of the communication device on the channel is that the channel is busy or the LBT fails, the communication device cannot transmit signals through the channel. In addition, to ensure fairness in the use of spectrum resources of the shared spectrum, if the communication device successfully performs LBT on the channel of the unlicensed spectrum, the duration for which the communication device can use the channel for communication transmission cannot exceed a certain time limit. This mechanism, by limiting the maximum communication duration after a successful LBT, allows different communication devices to have opportunities to access the shared channel, thereby enabling different communication systems to coexist harmoniously on this shared spectrum.

Although channel monitoring is not a global regulation, due to its benefits of interference avoidance and friendly coexistence for communication transmissions among communication systems on shared spectrum, channel monitoring is a mandatory feature that the communication device in the NR system on unlicensed spectrum must support in the design process of the NR system. From a network deployment perspective, channel monitoring includes two mechanisms, one is LBT of Load Based Equipment (LBE), also known as dynamic channel monitoring or dynamic channel occupancy, and the other is LBT of Frame Based Equipment (FBE), also known as semi-static channel monitoring or semi-static channel occupancy.

11. Dynamic channel monitoring

Dynamic channel monitoring can also be regarded as an LBE-based LBT mode, and the channel monitoring principle is that a communication device performs LBT on the carrier of the unlicensed spectrum after the service arrives, and starts signal transmission on the carrier after the LBT is successful. The LBT mode of dynamic channel monitoring includes a Type1 channel access mode and a Type2 channel access mode. The Type1 channel access method is multi-slot channel detection with random fallback based on contention window size adjustment, where a corresponding Channel Access Priority Class (CAPC) p can be selected according to the priority of a service to be transmitted. The Type2 channel access mode is a channel access method based on a fixed-length monitoring slot, which includes a Type2A channel access, a Type2B channel access, and a Type2C channel access. The Type1 channel access mode is mainly used for a communication device to initiate channel occupancy, and the Type2 channel access mode is mainly used for a communication device to share channel occupancy. A special case to be noted is that when a base station initiates channel occupancy for transmitting a Synchronization Signal/Physical Broadcast Channel (SS/PBCH) block in a Discover Reference Symbol (DRS) window, and the DRS window does not include unicast data transmission of the UE, the base station may use Type2A channel access to initiate channel occupancy if the length of the DRS window does not exceed 1 ms and the duty cycle of the DRS window transmission does not exceed 1/20.

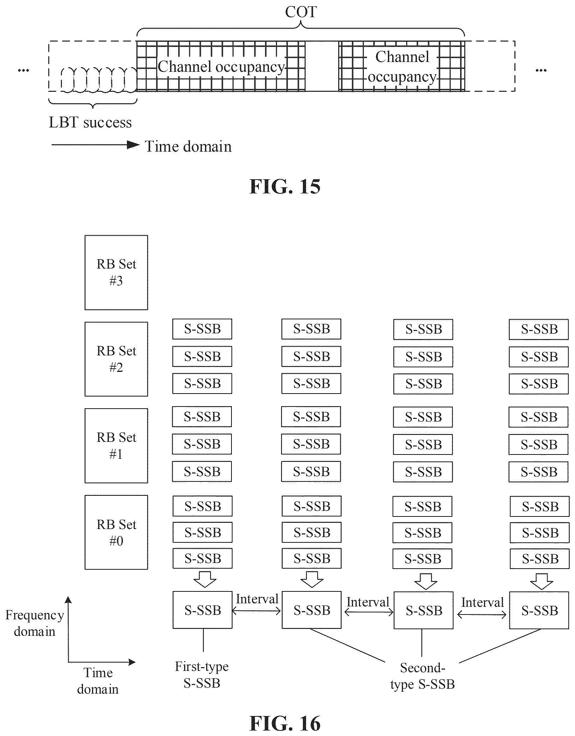

FIG. 15 illustrates an example of a channel occupancy time obtained by a communication device after successful LBT on a channel of the unlicensed spectrum and signal transmission using resources within the channel occupancy time.

12. Default channel access mode on the base station side: Type1 channel access

Taking a base station as an example, channel access parameters corresponding to the channel access priority class p on the base station side are illustrated in Table 3. In Table 3, $m_p$ refers to the number of fallback slots corresponding to the channel access priority class p, CWp refers to the size of the Contention Window (CW) corresponding to the channel access priority class p, $CW_{min,p}$ refers to the minimum value of $CW_p$ corresponding to the channel access priority class p, $CW_{max,p}$ refers to the maximum value of $CW_p$ corresponding to the channel access priority class p, and $T_{mcot,p}$ refers to the maximum occupied time length of the channel corresponding to the channel access priority class p.

If the channel access procedure ends, the base station may use the channel for transmission of the service to be transmitted. The maximum length of time for which the base station uses this channel for transmission cannot exceed $T_{mcot,p}$.

Table 3 Channel access parameters corresponding to different channel access priority classes *p*

| Channel access priority class (*p*) | $m_p$ | $CW_{min,p}$ | $CW_{max,p}$ | $T_{mcot,p}$ | Allowed $CW_p$ value |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

13. Channel occupancy time sharing on the base station side

When a base station initiates the Channel Occupancy Time (COT), the base station may not only use the resources in the COT for downlink transmission, but also share the resources in the COT with UE for uplink transmission. When the resources in the COT are shared with the UE for uplink transmission, the channel access mode that the UE can use is Type2A channel access, Type2B channel access, or Type2C channel access. The Type2A channel access, Type2B channel access, and Type2C channel access are all channel access modes based on fixed-length monitoring slots.

Type2A channel access:

The channel detection mode of the UE is 25 $\mu$s single-slot channel detection. Specifically, in the Type2A channel access, the UE may perform channel monitoring for 25 $\mu$s before transmission, and perform transmission after the channel monitoring is successful.

Type2B channel access:

The channel detection mode of the UE is 16 $\mu$s single-slot channel detection. Specifically, in the Type2B channel access, the UE may perform channel monitoring for 16 $\mu$s before transmission, and perform transmission after the channel monitoring is successful. The gap between the starting position of the transmission and the end position of the previous transmission is 16 $\mu$s.

Type2C channel access:

The UE performs transmission without performing channel detection after the end of the gap. Specifically, in the Type2C channel access, the UE can directly perform transmission, where the gap between the starting position of the transmission and the end position of the previous transmission is less than or equal to 16 $\mu$s. The length of this transmission does not exceed 584 $\mu$s.

14. Multi-channel access (Channel access for transmission (s) on multiple channels)

When a system supports multi-channel (multi-RB set), UE needs to respectively perform channel access on multiple channels, that is, LBT channel sensing. When using the NR-U Downlink (DL) multi-channel access mechanism, the UE can transmit on any channel where channel access is successful. In the sidelink unlicensed system, the following multi-channel access methods are supported for PSFCH and S-SSB transmission:

1) TypeA multi-channel access

When the UE needs to transmit PSFCH or S-SSB on C channels (RB sets), the UE needs to independently perform a Type1 channel access procedure for each of the C channels. If channel access is successful on any one or more of the channels, the UE may transmit the PSFCH or S-SSB on the one or more corresponding channels.

2) TypeB multi-channel access

When the UE needs to transmit PSFCH or S-SSB on C channels (RB sets), the UE can randomly select one channel among the C channels for Type1 channel access, and the remaining other channels use Type2 channel access. Only when the Type1 channel access is successfully, the UE can transmit on the channel where the Type2 channel access is successfully. If the Type1 channel access fails, all channels using the Type2 channel access are considered unavailable.

15. Channel access parameter indication (including Cyclic Prefix Extension (CPE))

In the NR-U system, when UE is scheduled to perform transmission of a Physical Uplink Shared Channel (PUSCH) or Physical Uplink Control Channel (PUCCH), the base station may indicate a channel access mode corresponding to the PUSCH or PUCCH by downlink control information (DCI) carrying an uplink grant (UL grant) or a downlink grant (DL grant). Since some channel access modes need to meet the gap requirement of 16 $\mu$s or 25 $\mu$s, the UE may ensure the gap size between two transmissions by transmitting a CPE, and correspondingly, the base station may indicate the CPE length of the first symbol of uplink transmission of the UE.
In the specific indication, the base station may explicitly indicate channel access parameters such as CPE length, channel access mode, or channel access priority class to the UE by joint coding. The following describes the characteristics of indication of channel access parameters introduced in different DCI formats.

1) Fallback uplink grant for scheduling PUSCH transmission (DCI format 0_0):

The set of joint indications of channel access mode and CPE length preset in the standard is illustrated in Table 4. The fallback uplink grant includes 2-bit LBT indication information for indicating the jointly encoded channel access mode and CPE length from the set illustrated in Table 4. The channel access mode and CPE length are used for PUSCH transmission. If the channel access mode is Type1 channel access, the UE autonomously selects the CAPC according to the service priority.

2) Fallback downlink grant for scheduling PDSCH transmission (DCI format 1_0):

The set of joint indications of channel access mode and CPE length preset in the standard is illustrated in Table 4. The fallback downlink grant includes 2-bit LBT indication information for indicating the jointly encoded channel access mode and CPE length from the set illustrated in Table 4. The channel access mode and CPE length are used for PUCCH transmission, where the PUCCH may carry an ACKnowledge (ACK) or a Negative ACKnowledge (NACK) corresponding to the PDSCH. If the channel access mode is Type1 channel access, the UE determines the channel access priority class CAPC=1 for transmitting the PUCCH.

Table 4 Channel Access Mode and CPE Length Joint Indication Set

| LBT indication | Channel access mode | CPE length |
|---|---|---|
| 0 | Type2C channel access | C2 * Symbol length-16 $\mu$s-TA |
| 1 | Type2A channel access | C3 * Symbol length-25 $\mu$s-TA |
| 2 | Type2A channel access | C1 * Symbol length-25 $\mu$s |
| 3 | Type1 channel access | 0 |

In Table 4, the value of C1 is specified by the protocol. When the subcarrier spacing is 15k Hz and 30 kHz, C1 = 1; when the subcarrier spacing is 60 kHz, C1 = 2. The values of C2 and C3 are configured by higher layer parameters. When the subcarrier spacing is 15 kHz and 30 kHz, the values of C2 and C3 range from 1 to 28; when the subcarrier spacing is 60 kHz, the values of C2 and C3 range from 2 to 28.

3) Non-fallback uplink grant for scheduling PUSCH transmission (DCI format 0_1):

An LBT parameter indication set is configured by the higher layer, and the LBT parameter indication set includes at least one jointly encoded channel access mode, CPE length and CAPC. The non-fallback uplink grant includes LBT indication information for indicating a jointly encoded channel access mode, CPE length and CAPC from the LBT parameter indication set. This channel access mode, CPE length and CAPC are used for PUSCH transmission. If the indicated channel access mode is Type2 channel access, the CAPC indicated at the same time is the CAPC used by the base station when obtaining the COT. The LBT indication information includes at most 6 bits.

4) Non-fallback downlink grant for scheduling PDSCH transmission (DCI format 1_1):

An LBT parameter indication set is configured by the higher layer, and the LBT parameter indication set includes at least one jointly encoded channel access mode and CPE length. The non-fallback downlink grant includes LBT indication information for indicating a jointly encoded channel access mode and CPE length from the LBT parameter indication set. The channel access mode and the CPE length are used for PUCCH transmission, and the PUCCH may carry ACK or NACK information corresponding to PDSCH. If the channel access mode is Type1 channel access, the UE determines a channel access priority class CAPC =1 for transmitting the PUCCH. The LBT indication information includes at most 4 bits.

In addition to the above explicit indication, the base station may also implicitly indicate the channel access mode within a COT. When the UE receives a UL grant or DL grant transmitted by the base station indicating that the channel access type corresponding to the PUSCH or PUCCH is Type1 channel access, if the UE can determine that the PUSCH or PUCCH belongs to the COT of the base station, for example, the UE receives DCI format 2_0 transmitted by the base station and determines according to the DCI format 2_0 that the PUSCH or PUCCH is within the COT of the base station, the UE may update the channel access type corresponding to the PUSCH or PUCCH to Type2A channel access instead of using the Type1 channel access.

16. S-SSB time-frequency domain mapping

According to the conclusion of the current R18 SL technology, mapping of S-SSB in the time-frequency domain is illustrated in FIG. 16. A first-type S-SSB and a second-type S-SSB are included within one S-SSB period (160 ms). The first-type S-SSB refers to an S-SSB slot resource configured in R16/R17 SL, and the second-type S-SSB refers to an additional S-SSB slot resource newly defined in R18. In a frequency domain resource corresponding to one S-SSB slot, if there are four resource block (RB) sets in the frequency domain, the UE may attempt to map/transmit the S-SSB on one or more RB sets. The "attempt" means that the UE needs to perform LBT on an RB set first, if detecting that the RB set is not occupied/available, the UE maps/transmits S-SSB on the RB set; if the UE needs to transmit on a plurality of RB sets, the UE performs LBT on the plurality of RB sets respectively, and determines whether the S-SSB can be transmitted on the corresponding RB set according to the LBT result of each RB set. Within a RB set, S-SSBs are repeatedly mapped in the frequency domain. On multiple RB sets corresponding to one slot, the S-SSB is also repeated within each RB set.

In addition, according to the current conclusion, each S-SSB slot in R16/R17 corresponds to K additional S-SSB slots, and the interval between these S-SSB slots needs to be obtained by configuration or pre-configuration.

The related technologies/terms related to the embodiments of the present disclosure have been briefly described above, which is not repeatedly described in the following embodiments.

It should be understood that the terms "system" and "network" in the present disclosure are often used interchangeably herein. The term "and/or" herein is only an association relationship describing associated objects and represents three relationships. For example, A and/or B may represent the following three cases: independent existence of A, existence of both A and B, and independent existence of B. In addition, the character "/" in the present disclosure generally represents that previous and next associated objects form an "or" relationship. It is to be understood that the term "indication" mentioned in the embodiments of the present disclosure may be a direct indication, an indirect indication, or an indication of an associative relationship. For example, an indication of B by A may indicate that A directly indicates B, for example, B is obtained through A, or that A indirectly indicates B, for example, A indicates C and B is obtained through C, or that there is an association between A and B. It should be understood that the term "correspondence" in the embodiments of the present disclosure may indicate that there is a direct correspondence or indirect correspondence between two elements, or may indicate that there is an association relationship between the two elements, or may indicate a relationship between indicating and being indicated, or between configuring and being configured, etc. It should also be understood that in the embodiments of the present disclosure, "predefined" or "predefined rule" may be implemented by pre-storing the corresponding codes, tables, or other manners for indicating relevant information in the device (including, for example, the terminal device and the network device), and the specific implementations thereof are not limited in the present disclosure. For example, "predefined" may refer to those defined in a protocol. It should also be understood that in the embodiments of the present disclosure, the "protocol" may refer to a standard protocol in the field of communication, which may include, for example, an LTE protocol, an NR protocol, and related protocols applied in the future communication system, which is not limited in the present disclosure.

It should also be understood that the embodiments of the present disclosure do not limit the specific form of the terminal. As an example, the terminal in the embodiments of the present disclosure may refer to an access terminal, a User Equipment (UE), a subscriber unit, a subscriber station, a mobile station, a mobile platform, a remote station, a remote terminal, a mobile device, a user terminal, a terminal device, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device having a wireless communication function, a computing device or other processing device connected to a wireless modem, a vehicle-mounted device, a wearable device, a terminal device in the 5th generation (5G) network, or a terminal device in a future evolved network, or the like.

In the current SL unlicensed band technology, when a UE transmits S-SSB on a single channel, it needs to perform channel access on the single channel, and the supported channel access modes include Type1 and Type2A channel access modes. When a UE transmits S-SSB on a plurality of channels, it needs to perform channel access on the plurality of channels respectively, and the supported multi-channel access modes include Type A (TypeA) and Type B (TypeB) channel access modes.

In the TypeA multi-channel access procedure, the UE needs to independently perform Type1 channel access on the plurality of channels, and if the access is successful on any one or more of the channels, the UE may transmit the S-SSB on the one or more channels. In the TypeB multi-channel access procedure, the UE may randomly select one channel among the plurality of channels for Type1 channel access, with other channels for Type2 channel access. If the Type1 channel access is successful, the UE may transmit S-SSB on each channel where the channel access is successful. If the Type1 channel access fails, the plurality of channels are considered unavailable.

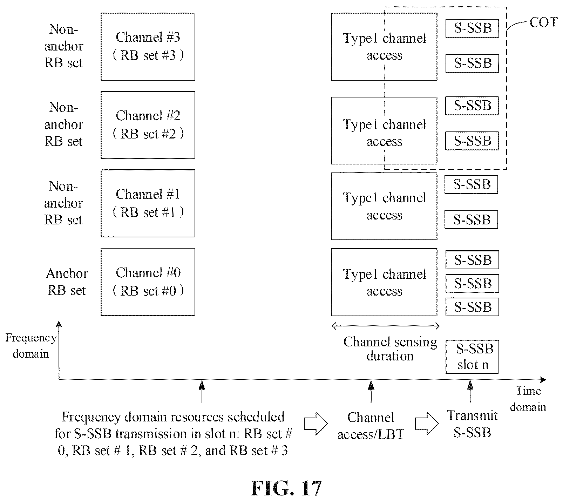

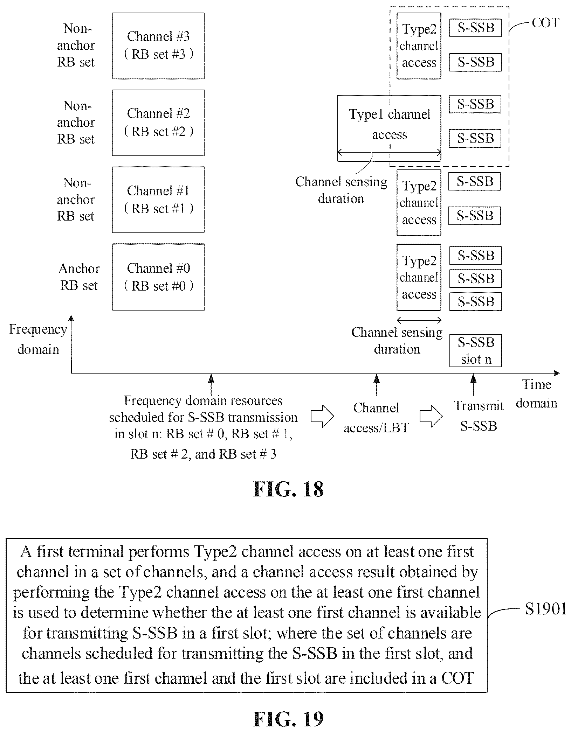

In some scenarios, other UEs may share the COT with the current UE before transmitting the S-SSB. If the current UE transmits the S-SSB on the channel included in the COT, the COT resource can be prevented from being preempted by a user of a different system. However, the TypeA or TypeB multi-channel access mode described above cannot effectively prevent COT resources from being preempted by users of different systems. This will be described below by taking FIG. 17 and FIG. 18 as examples.

FIG. 17 is a schematic diagram illustrating an example of channel access using the TypeA multi-channel access mode in a scenario in which another UE shares a COT with the current UE. As illustrated in FIG. 17, the UE independently performs LBT channel sensing using the Type1 channel access mode on each channel/RB set, and in this procedure, another UE shares a COT with the current UE, and the COT includes channel # 2 (RB set # 2) and channel # 3 (RB set # 3). According to the existing mechanism, since the channel sensing duration of the Type1 channel access procedure is very long, which is much longer than the channel sensing duration of the Type2A channel access procedure (25 $\mu$s), using Type1 channel access would cause COT loss, so it is stipulated that Type2 channel access must be used within the COT. In this case, if the UE still uses the Type1 channel access according to the pre-planned scheme, the time-frequency resource(s) within the COT duration cannot be used. As a result, the probability of COT loss is greatly increased, resulting in resource waste. On the other hand, the longer the channel sensing duration, the easier the resource is to be occupied (for example, by inter-system UEs). That is, if other UEs (such as, inter-system UEs) perform channel access on channel # 2 and channel # 3 using the Type2A channel access mode with a shorter sensing duration at this time, there will be a high probability of preempting the COT resource, and thus, the current UE has to discard the existing COT. If the current UE discards the existing COT and re-initiates COT by using the Type1 channel sensing mode, this will lead to waste of the existing COT resources.

FIG. 18 is a schematic diagram illustrating an example of channel access using the TypeB multi-channel access mode in a scenario in which another UE shares a COT with the current UE. As illustrated in FIG. 18, the UE selects one channel in a channel set/RB set to use Type1 channel access, while using Type2 channel access on other channels. For example, the UE selects channel # 2 (RB set # 2) for Type1 channel access, and selects channel # 0 (RB set # 0), channel # 1 (RB set # 1), and channel # 3 (RB set # 3) for Type2 channel access, and whether the channel on which the Type2 channel access is used can be used to transmit S-SSB depends on whether the Type1 channel access on channel # 2 is successful, that is, the channel access correlation between different channels is very high. If the UE pre-plans to use Type1 channel access on channel # 2, and COT sharing resources appear only after channel sensing has been started, the Type1 channel access cannot be changed to Type2 channel access. Thus, if other UEs (e.g., inter-system UEs) use the Type2A channel access mode with a shorter sensing duration to perform channel access on channel # 2 at this time, there will be a high probability that the current UE fails to perform channel access on channel #2, thereby preventing S-SSB transmission on both channel #2 and channel #3, and further leading to COT loss.

In the existing mechanism, the purpose of supporting S-SSB transmission on multiple channels/RB sets is that when there are COT sharing resources, the UE can transmit S-SSB not only on the anchor channel/anchor RB set, but also on the channel/RB set included in the COT, thereby maintaining occupancy of COT resources, to prevent the COT resources from being preempted by UEs of different systems, thus ensuring resource usage efficiency of the current sidelink system. However, the TypeA and TypeB multi-channel access mechanisms defined in the existing mechanism do not provide an effective method to maintain COT occupancy for the scenario where COT sharing resources appear before S-SSB transmission, resulting in a high probability of COT loss (such as COT being preempted by UEs of different systems). This is contrary to the original intention of transmitting S-SSB on multiple channels/RB sets. Therefore, for the scenario where COT sharing resources appear before S-SSB transmission, how to avoid COT loss is an urgent problem to be solved.

In view of this, the present disclosure provides a channel access method and apparatus, a terminal, a chip, and a storage medium. In the method, a first terminal may perform Type2 channel access on at least one first channel in a set of channels, and the obtained channel access result may be used to determine whether the at least one first channel is available for transmitting S-SSB in a first slot. The set of channels are channels scheduled for S-SSB transmission in the first slot, and the at least one first channel and the first slot are included within a COT.

According to the method provided by the embodiments of the present disclosure, since the channel sensing duration in the Type2 channel access procedure is short, the Type2 channel access is performed on at least one first channel included in the COT, and whether the at least one first channel is available for transmitting the S-SSB is determined based on the result of the channel access, so that the probability of the first terminal successfully accessing the at least one first channel and transmitting the S-SSB on the at least one first channel is increased, thereby facilitating to maintain occupancy of COT resources to avoid COT resource loss (e.g., preventing COT resources being preempted by UEs of different systems).

It should be noted that, in the embodiments of the present disclosure, "performing channel access" may be replaced with "performing LBT" or "performing channel sensing". In some scenarios, "a channel (such as a first channel)" in the embodiments of the present disclosure may also be replaced with "an RB set (such as a first RB set)".

In order to facilitate understanding of the technical solutions of the embodiments of the present disclosure, the technical solutions of the present disclosure will be described in detail below with reference to specific embodiments. The above related technologies as alternative solutions can be arbitrarily combined with the technical solutions of the embodiments of the present disclosure, and shall fall within the scope of protection of the embodiments of the present disclosure. The embodiments of the present disclosure include at least part of the following contents.

FIG. 19 is a schematic flowchart of a channel access method according to an embodiment of the present disclosure. As illustrated in FIG. 19, the method may include the following operation.

In S1901, a first terminal performs Type2 channel access on at least one first channel in a set of channels, and a channel access result obtained by performing the Type2 channel access on the at least one first channel is used to determine whether the at least one first channel is available for transmitting S-SSB in a first slot. The set of channels are channels scheduled for transmitting the S-SSB in the first slot, and the at least one first channel and the first slot are included in a COT.

The channel scheduled for transmitting the S-SSB in the first slot may also be understood as a channel determined/pre-determined to be used for transmitting the S-SSB in the first slot. That is, for a predetermined set of channels to be used for S-SSB transmission in the first slot, the first terminal may perform channel access using the Type2 (e.g., Type2A, Type2B or Type2C) channel access mode on at least one first channel in the set of channels, and the at least one first channel is included in the COT.

Further, the channel access result obtained by the first terminal performing Type 2 channel access on the at least one first channel can be used to determine whether the at least one first channel is available for transmitting the S-SSB in the first slot. For example, for a first channel of the at least one first channel, if the result of Type2 channel access on the first channel performed by the first terminal is successful, the first terminal may transmit S-SSB on the first channel, and the slot for transmitting the S-SSB is the first slot. If the result of Type2 channel access on the first channel performed by the first terminal is a failure, the first terminal cannot transmit the S-SSB on the first channel in the first slot.

In some embodiments, since S-SSB is repeatedly mapped in the frequency domain within a channel, i.e., the S-SSB can be repeated multiple times within a channel (repeatedly mapped multiple times), transmitting the S-SSB on a channel may also be understood as transmitting multiple repeated S-SSBs on the channel.

According to the above technical solution, the first terminal may perform Type2 channel access on at least one first channel, and the obtained channel access result may be used to determine whether the at least one first channel is available for transmitting S-SSB in the first slot. Since the channel sensing duration in the Type2 channel access procedure is short, performing the Type2 channel access on at least one first channel included in the COT and determining whether the at least one first channel is available for transmitting the S-SSB based on the result of the channel access is beneficial to increasing the probability that the first terminal successfully accesses the at least one first channel and transmits the S-SSB on the at least one first channel, thereby facilitating to maintain occupancy of COT resources to avoid COT resource loss (e.g., preventing COT resources being preempted by UEs of different systems). In addition, if the result of the first terminal performing the Type2 channel access on a certain first channel is successful, the first terminal may transmit the S-SSB on the first channel, that is, whether each first channel can be used to transmit the S-SSB in the first slot does not depend on whether the channel access result of another channel is successful, or the channel access of each first channel can be performed independently, thereby further increasing the probability that the first terminal successfully accesses the at least one first channel and transmits the S-SSB on the at least one first channel, and further improving the transmission/detection effect of the S-SSB.

In some embodiments, a channel access mode scheduled for all or part of the at least one first channel prior to the first time may be Type1 channel access. The first time is a time instant at which the first terminal acquires time-frequency information of the COT.

That is, before the first terminal acquires the time-frequency information of the COT, the first terminal may plan/pre-plan to perform Type1 channel access on all or part of the first channels. If the first terminal obtains the time-frequency information of the COT, the first terminal may change to use Type2 channel access on all or part of the first channels before the first slot or before transmitting the S-SSB, so as to improve the successful probability of the channel access and reduce the probability of COT loss.

In some embodiments, if the first terminal has started execution of Type1 channel access on all or part of the first channels at the first time, the first terminal may stop performing the Type1 channel access at the first time.

That is, if the first terminal has started performing Type1 channel access on all or part of the first channels according to a pre-scheduled plan when acquiring time-frequency information of the COT, the first terminal may stop performing the Type1 channel access on all or part of the first channels when the time-frequency information of the COT is acquired, and may discard part/all of the channel sensing results acquired in the Type 1 channel access procedure. Further, the first terminal may wait until before the first slot to perform Type2 channel access on all or part of the first channels, to improve the successful probability of the channel access, thereby reducing the probability of COT loss.

In some embodiments, if the first terminal has not started performing Type1 channel access on all or part of the first channels at the first time, the first terminal may not perform the Type1 channel access.

That is, if the first terminal has not yet performed the Type1 channel access on all or part of the first channels according to a pre-scheduled plan when acquiring time-frequency information of the COT, then the first terminal does not need to perform the Type1 channel access on all or part of the first channels at the originally scheduled (pre-planned) time to start performing the Type1 channel access, but may wait until before the first slot to perform Type2 channel access on all or part of the first channels, so as to improve the successful probability of the channel access and reduce the probability of COT loss.

It is to be noted that, in the embodiments of the present disclosure, starting execution of the Type1 channel access may also be understood as starting performing the channel sensing procedure of the Type1 channel access, or may also be understood as starting performing Type1 channel sensing.

In some embodiments, the time interval between the first time (the time when the first terminal acquires time-frequency information of the COT) and the first slot is greater than or equal to the duration required for performing Type2 channel access. In some scenarios, the duration required for performing Type2 channel access may also be understood as the time duration required for channel sensing using the Type2 channel access mode.

It is to be understood that if the time interval between the first time and the first slot is greater than or equal to the duration required for performing Type2 channel access, it indicates that when the first terminal obtains the time-frequency information of the COT, the first terminal has sufficient time to perform the Type2 channel access before the first slot. Therefore, in this case, the first terminal may stop the Type1 channel access being performed on all or part of the first channels, or may wait until before the first slot to perform the Type2 channel access on all or part of the first channels, instead of performing Type1 channel access on all or part of the first channels as according to a pre-scheduled plan.

In some embodiments, if the time interval between the first time and the first slot is less than the duration required for performing Type2 channel access, it indicates that the first terminal has no sufficient time to perform Type2 channel access before the first slot in the case that the first terminal acquires time-frequency information of the COT, so in this case, the first terminal may perform the Type1 channel access on all or part of the first channels according to a pre-scheduled plan.

In some embodiments, the method may further include the following operation. The first terminal determines/-decides whether a time interval between the first time and the first slot is greater than or equal to a duration required for performing Type2 channel access. Accordingly, the first terminal may decide whether to perform Type1 channel access on all or part of the first channels according to a pre-scheduled plan based on the determination result.

In some embodiments, all or part of the first channels are non-anchor channels in the set of channels. That is, the channel on which the first terminal pre-planned to perform Type1 channel access may be a non-anchor channel in the set of channels.

In some embodiments, for an anchor channel in the set of channels, the first terminal may perform channel access using the Type2 channel access mode. In some scenarios, the device communicating with the first terminal may be a weak-capability device (such as a weak-capability terminal), and the weak-capability device cannot receive S-SSB on a channel other than the anchor channel. Therefore, the first terminal may increase the probability of successfully accessing the anchor channel and transmitting the S-SSB on the anchor channel by performing Type2 channel access on the anchor channel, thereby increasing the probability of the weak-capability device receiving the S-SSB transmitted by the first terminal.

In some embodiments, the method may further include the following operation. Type1 channel access is performed on at least one second channel in the set of channels. The COT does not include the at least one second channel. The channel access result obtained by performing the Type1 channel access on the at least one second channel is used to determine whether the at least one second channel is available for transmitting the S-SSB in the first slot.

That is, for at least one second channel not included in the COT, the first terminal may perform Type1 channel access on the at least one second channel. For example, if the first terminal has planned to perform Type1 channel access on the at least one second channel before the first time, then at the pre-planned time to start performing the Type1 channel access, the first terminal may perform Type1 channel access on the at least one second channel according to the pre-scheduled plan.

Exemplarily, the channel access result obtained by performing Type1 channel access on the at least one second channel may be used to determine whether the at least one second channel is available for transmitting the S-SSB in the first slot. For example, for a second channel of the at least one second channel, if the result of Type1 channel access on the second channel performed by the first terminal is successful, the first terminal may transmit S-SSB on the second channel, and the slot for transmitting the S-SSB is the first slot; if the result of Type1 channel access on the second channel performed by the first terminal is a failure, the first terminal cannot transmit S-SSB on the second channel in the first slot.

According to the above technical solution, if the result of Type1 channel access on a second channel performed by the first terminal is successful, the first terminal may transmit S-SSB on the second channel, that is, whether each second channel can be used to transmit S-SSB in the first slot does not depend on whether the channel access result of another channel is successful, or the channel access of each second channel can be performed independently, thereby increasing the probability that the first terminal successfully accesses the at least one second channel and transmits the S-SSB on the at least one second channel, and further improving the transmission/detection effect of the S-SSB.

In some embodiments, the at least one second channel is a non-anchor channel(s) in the set of channels. That is, the first terminal may select at least one second channel among the non-anchor channels in the set of channels to perform Type1 channel access.

In some embodiments, the method may further include the following operation. Type2 channel access is performed on at least one third channel in the set of channels. The COT does not include the at least one second channel. The channel access result obtained by performing the Type2 channel access on the at least one third channel may be used to determine whether the at least one third channel is available for transmitting the S-SSB in the first slot.

That is, for at least one third channel not included in the COT, the first terminal may perform Type2 channel access on the at least one third channel. For example, if the first terminal has planned to perform Type2 channel access on the at least one third channel before the first time, then at the pre-planned time to start performing the Type2 channel access, the first terminal may perform the Type2 channel access on the at least one third channel according to the pre-scheduled plan.

Exemplarily, the channel access result obtained by performing Type2 channel access on the at least one third channel may be used to determine whether the at least one third channel is available for transmitting the S-SSB in the first slot. For example, for a third channel of the at least one third channel, if the result of Type2 channel access on the third channel performed by the first terminal is successful, the first terminal may transmit S-SSB on the third channel, and the slot in which the S-SSB is transmitted is the first slot; if the result of Type2 channel access on the third channel performed by the first terminal is a failure, the first terminal cannot transmit S-SSB on the third channel in the first slot.

According to the above technical solution, if the result of Type2 channel access on a third channel performed by the first terminal is successful, the first terminal may transmit S-SSB on the third channel, that is, whether each third channel can be used to transmit the S-SSB in the first slot does not depend on whether the channel access result of another channel is successful, or the channel access of each third channel can be performed independently, thereby increasing the probability that the first terminal successfully accesses the at least one third channel and transmits the S-SSB on the at least one third channel, and further improving the transmission/detection effect of the S-SSB.

In some embodiments, before the first time (the time when the first terminal acquires time-frequency information of the COT), for one first channel (for example, denoted as a target first channel) among the at least one first channel, the channel access mode scheduled to be used may be Type 1 channel access.

That is, before the first terminal acquires time-frequency information of the COT, the first terminal may plan/pre-plan to perform Type 1 channel access on the target first channel. If the first terminal obtains the time-frequency information of the COT, the first terminal may change to use Type 2 channel access on the target first channel before the first slot. For other first channels (other first channels other than the target first channel) among the at least one first channel, the first terminal may perform Type2 channel access before the first slot according to a pre-scheduled plan. Thus, it is beneficial to increase the probability that the first terminal successfully accesses the first channel included in the COT, thereby avoiding loss of the COT resource.

In some embodiments, if the first terminal has started performing Type1 channel access on the target first channel at the first time, the first terminal may stop performing the Type1 channel access at the first time.

That is, if the first terminal has started performing the Type1 channel access on the target first channel according to a pre-scheduled plan when acquiring time-frequency information of the COT, the first terminal may stop performing the Type1 channel access on the target first channel when acquiring the time-frequency information of the COT, and may discard part/all of the channel sensing results acquired in the Type1 channel access procedure. Further, the first terminal may wait until before the first slot to perform Type2 channel access on the target first channel to improve the successful probability of channel access, thereby reducing the probability of COT loss.

In some embodiments, if the first terminal has not started performing Type1 channel access on the target first channel at the first time, the first terminal may not perform the Type1 channel access.

That is, if the first terminal has not yet performed the Type1 channel access on the target first channel according to a pre-scheduled plan when acquiring the time-frequency information of the COT, then at the originally scheduled (pre-planned) time to start performing the Type1 channel access, the first terminal does not need to perform the Type1 channel access on the target first channel, but may wait until before the first slot to perform Type2 channel access on the target first channel, so as to improve the successful probability of the channel access and reduce the probability of COT loss.

In some embodiments, the time interval between the first time (the time instant at which the first terminal acquires time-frequency information of the COT) and the first slot is greater than or equal to the duration required for performing Type2 channel access.

It can be understood that if the time interval between the first time and the first slot is greater than or equal to the duration required for performing the Type2 channel access, it indicates that the first terminal has sufficient time to perform the Type2 channel access before the first slot when the first terminal acquires the time-frequency information of the COT, so in this case, the first terminal may stop Type1 channel access being performed on the target first channel, or may wait until before the first slot to perform Type2 channel access on the target first channel, instead of performing Type1 channel access on the target first channel according to a pre-scheduled plan.

In some embodiments, if the time interval between the first time and the first slot is less than the duration required for performing the Type2 channel access, it indicates that the first terminal has no sufficient time to perform the Type2 channel access before the first slot when the first terminal acquires the time-frequency information of the COT. Therefore, in this case, the first terminal may perform the Type1 channel access on the target first channel according to a pre-scheduled plan.

In some embodiments, the method may further include the following operation. The first terminal determines/-decides whether a time interval between the first time and the first slot is greater than or equal to a duration required for performing Type2 channel access. Accordingly, the first terminal may decide whether to perform Type1 channel access on the target first channel according to a pre-scheduled plan based on the determination result.

In some embodiments, the target first channel is a non-anchor channels in the set of channels. That is, the first terminal may select one channel (such as the target first channel) among non-anchor channels in the set of channels to perform Type1 channel access.

In some embodiments, the channel access result obtained by performing Type2 channel access on the at least one first channel includes a first channel access result obtained by performing Type2 channel access on the target first channel. If the first channel access result is successful, the channel access result obtained by performing Type2 channel access on the at least one first channel may be used to determine whether the at least one first channel is available for transmitting the S-SSB in the first slot.

That is, if the result of Type2 channel access on the target first channel performed by the first terminal is successful, the first terminal may determine whether the at least one first channel is available for transmitting the S-SSB in the first slot based on the channel access result obtained by performing the Type2 channel access on the at least one first channel.

In some embodiments, the method may further include the following operation. Type2 channel access is performed on at least one fourth channel in the set of channels. The COT does not include the at least one fourth channel. In a case that the first channel access result is successful, the channel access result obtained by performing Type2 channel access on the at least one fourth channel may be used to determine whether the at least one fourth channel is available for transmitting the S-SSB in the first slot.

That is, for at least one fourth channel not included in the COT, the first terminal may perform Type2 channel access on the at least one fourth channel. For example, if the first terminal has planned to perform Type2 channel access on the at least one fourth channel before the first time, then the first terminal may perform, at the pre-planned time to start performing the Type2 channel access, Type2 channel access on the at least one fourth channel according to the pre-scheduled plan.

Exemplarily, in a case that the first channel access result is successful, the channel access result obtained by performing the Type2 channel access on the at least one fourth channel may be used to determine whether the at least one fourth channel is available for transmitting the S-SSB in the first slot. For example, in a case that the first channel access result is successful, for a fourth channel among the at least one fourth channel, if the first terminal successfully performs Type2 channel access on the fourth channel, the first terminal may transmit S-SSB on the fourth channel, and the slot for transmitting the S-SSB is the first slot. If the first terminal fails to perform the Type2 channel access on the fourth channel, the first terminal cannot transmit the S-SSB on the fourth channel in the first slot.

In some embodiments, in a case that the first channel access result is a failure, the set of channels is not used to transmit the S-SSB in the first slot. That is, whether the at least one first channel and/or the at least one fourth channel is available for transmitting the S-SSB in the first slot depends on whether the first channel access result is successful. For example, if the first channel access result is successful, the at least one first channel and/or the at least one fourth channel may be used to transmit the S-SSB in the first slot. If the first channel access result is a failure, none of the set of channels can be used to transmit the S-SSB in the first slot.

In some embodiments, the method may further include the following operation. Type2 channel access is performed on at least one fourth channel in the set of channels. The COT does not include the at least one fourth channel. The channel access result obtained by performing the Type2 channel access on the at least one fourth channel may be used to determine whether the at least one fourth channel is available for transmitting the S-SSB in the first slot.

That is, for at least one fourth channel not included in the COT, the first terminal may perform Type2 channel access on the at least one fourth channel. For example, if the first terminal has planned to perform Type2 channel access on the at least one fourth channel before the first time, then at the pre-planned time to start performing the Type2 channel access, the first terminal may perform Type2 channel access on the at least one fourth channel according to the pre-scheduled plan.

Exemplarily, the channel access result obtained by performing Type2 channel access on the at least one fourth channel may be used to determine whether the at least one fourth channel is available for transmitting the S-SSB in the first slot. For example, for a fourth channel of the at least one fourth channel, if the result of Type2 channel access on the fourth channel performed by the first terminal is successful, the first terminal may transmit the S-SSB on the fourth channel, and the slot in which the S-SSB is transmitted is the first slot; if the result of Type2 channel access on the fourth channel performed by the first terminal is a failure, the first terminal cannot transmit the S-SSB on the fourth channel in the first slot.

According to the above technical solution, if the result of Type2 channel access on a fourth channel performed by the first terminal is successful, the first terminal may transmit the S-SSB on the fourth channel, that is, whether each fourth channel can be used to transmit the S-SSB in the first slot does not depend on whether the first channel access result is successful, or the channel access of each fourth channel can be performed independently, thereby increasing the probability that the first terminal successfully accesses the at least one fourth channel and transmits the S-SSB on the at least one fourth channel, and further improving the transmission/detection effect of the S-SSB.

In some embodiments, the method may further include the following operation. The first terminal receives first information from a second terminal. The first information is used to share a COT with the first terminal, the first information includes time-frequency information of the COT, and the COT is initiated by the second terminal.

That is, the second terminal may share the COT initiated by the second terminal with the first terminal by transmitting the first information to the first terminal, and the time-frequency information of the COT may be carried in the first information. Correspondingly, the first terminal may acquire the time-frequency information of the COT by receiving the first information. Based on the time-frequency information of the COT, the first terminal can know which channels and slots are included in the COT. For example, in the present embodiments, the first terminal may know that at least one first channel and a first slot are included in the COT based on the time-frequency information of the COT, and thus, the first terminal may perform Type2 channel access on the at least one first channel to increase the probability that the first terminal successfully accesses the at least one first channel and transmits S-SSB on the at least one first channel, thereby avoiding loss of COT resources.

In some embodiments, the first time (the time instant when the first terminal acquires the time-frequency information of the COT) may also be understood as the time instant when the first terminal receives the first information from the second terminal.

The channel access method provided by the embodiments of the present disclosure has been described above, and in order to facilitate understanding of the embodiments of the present disclosure, possible implementations of the channel access method applicable to the embodiments of the present disclosure will be described below with reference to examples.

First Scheme

It is assumed that a set of channels (or RB sets) scheduled by a UE (an example of the first terminal) for transmitting S-SSB in the slot n (corresponding to the first slot in the foregoing embodiments) includes C channels, and a channel $C_i$ is any one of the C channels. For the channel $C_i$, the UE may perform channel access (channel sensing) using any one of Type1 and Type2 (2A, 2B, or 2C) channel access modes. If the UE successfully accesses on the channel $C_i$, the UE may transmit the S-SSB on the channel $C_i$.

In the first scheme, in a case where the UE uses Type1 channel access on the channel $C_i$, when the UE acquires COT information (time-frequency information of the COT), if the COT includes a slot n on the channel $C_i$ in which the S-SSB is to be transmitted, the UE may change to use the Type2 (2A, 2B, or 2C) channel access mode on the channel $C_i$ before the slot n.

The use of Type1 channel access may include, for example, the following two cases.

Case # 1: Type1 channel access is scheduled to be used, but channel sensing has not been implemented.

Case # 2: The channel sensing procedure for Type1 channel access has been started.

For the above case # 1, that is, the UE plans to use Type1 channel access on the channel $C_i$, but has not performed channel sensing. In this case, at the originally-scheduled (planned) time to start Type 1 channel access, the UE does not perform Type1 channel access, but wait until before the slot n to perform Type2 channel access.

For the above case # 2, that is, the UE has started performing the channel sensing procedure of Type1 channel access on the channel $C_i$. In this case, the UE may switch to the Type2 (2A, 2B, or 2C) channel access mode.

For example, in the process of performing Type1 channel access on the channel $C_i$, if the UE acquires COT information at time $t_1$ (corresponding to the first time in the foregoing embodiments), the UE may stop Type1 channel access/channel sensing at time $t_1$, and start to perform Type2 (2A, 2B, or 2C) channel access/channel sensing at time $t_2$ before the slot n. The UE may ignore the acquired Type1 channel sensing result (part/ all of the channel sensing results).

In some scenarios, for the above case # 2, if the time interval (remaining time length) between time $t_1$ (the time when the UE obtains COT information) and the slot n is insufficient to perform the Type2 (2A, 2B, or 2C) channel access procedure, the UE may continue to perform and complete the Type1 channel access procedure currently being implemented, and access the channel using the Type1 channel sensing result (if successful).

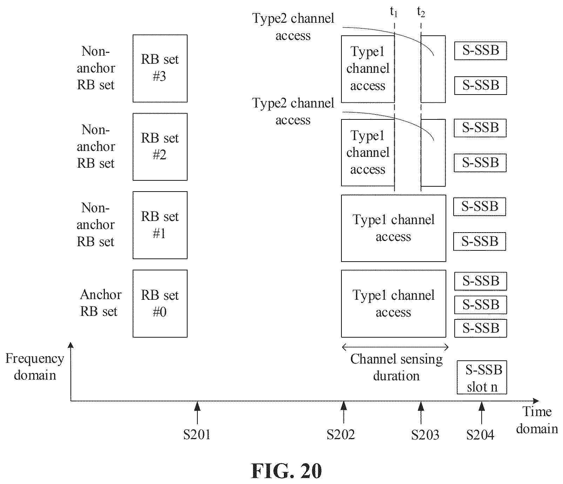

For ease of understanding, FIG. 20 illustrates an example of the first scheme. In FIG. 20, it is assumed that the multi-channel access mode the UE plans to adopt is TypeA multi-channel access. The flow illustrated in FIG. 20 may include the following operations in S201 to S204.

In S201, the UE plans/decides that frequency domain resources for transmitting S-SSB in slot n (S-SSB slot n) include RB set # 0, RB set # 1, RB set # 2, and RB set # 3, and may determine the number of repeated S-SSBs to be transmitted on each RB set, and the interval between adjacent S-SSBs in one RB set, etc. RB set # 0 is an anchor RB set, and RB set # 1, RB set # 2, and RB set # 3 are non-anchor RB sets.

In S202, the UE performs Type1 channel access/LBT.

In this operation, the UE may perform channel access using the TypeA multi-channel access mode. That is, the UE may independently perform channel access/LBT using the Type1 channel access mode on RB set # 0, RB set # 1, RB set # 2, and RB set # 3, respectively.

In S203, the UE changes to use the Type2 channel access mode to perform channel sensing on an RB set included in the COT.

For example, the UE acquires COT information at time $t_1$, and the UE may know based on the COT information that RB set # 2 and RB set # 3 are included in the COT. Further, the UE may change to use the Type2 channel access mode to perform channel sensing on RB set # 2 and RB set # 3. For example, the UE may stop Type1 channel access at time $t_1$, and starts to perform Type2 channel access at time $t_2$ before the slot n.

In S204, the UE transmits the S-SSB in the slot n.

For any RB set among RB set # 0 to RB set # 3, if the UE successfully performs channel access on the RB set, the UE may transmit the S-SSB on the RB set, and the slot in which the S-SSB is transmitted is the slot n. For example, if the UE successfully performs channel access on RB set # 0, the UE may transmit the S-SSB on RB set # 0. For another example, if the UE successfully performs channel access on RB set # 2, the UE may transmit the S-SSB on RB set # 2.

It should be understood that "RB set" in the scheme illustrated in FIG. 20 may also be replaced with "channels".

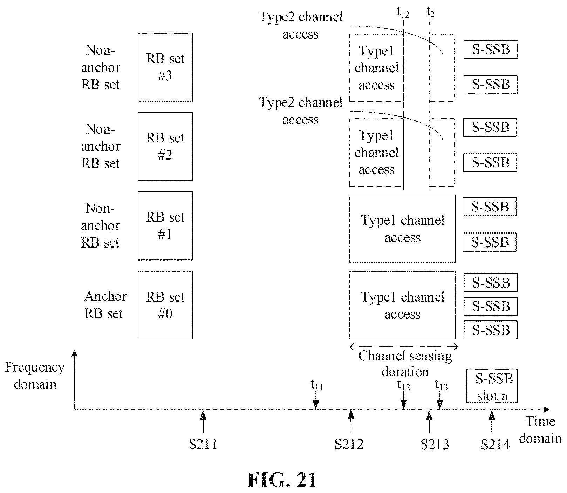

FIG. 21 illustrates another example of the first scheme. In FIG. 21, it is assumed that the multi-channel access mode the UE plans to adopt is TypeA multi-channel access. The flow illustrated in FIG. 21 may include the following operations in S211 to S214.

In S211, the UE plans/decides that frequency domain resources for transmitting S-SSB in slot n (S-SSB slot n) include RB set # 0, RB set # 1, RB set # 2, and RB set # 3, and may determine the number of repeated S-SSBs to be transmitted on each RB set, and the interval between adjacent S-SSBs in one RB set, etc. RB set # 0 is an anchor RB set, and RB set # 1, RB set # 2, and RB set # 3 are non-anchor RB sets.

In S212, the UE performs Type1 channel access/LBT on part or all of the RB sets.

In one possible case (denoted as case # 11), the time at which the UE acquires COT information is time $t_{11}$. That is, at time $t_{11}$, the UE may know based on the COT information that RB set # 2 and RB set # 3 are included in the COT. As illustrated in FIG. 21, time $t_{11}$ is prior to the time when Type1 channel access starts to be performed as scheduled, i.e., at time $t_{11}$, the UE has not yet started performing Type1 channel access. In this case, at the time when Type1 channel access starts to be performed as scheduled, the UE does not perform Type1 channel access on RB set # 2 and RB set # 3. The UE may still perform Type1 channel access on RB set # 0 and RB set # 1 as scheduled.

In another possible case (denoted as case # 12), the time at which the UE acquires COT information is time $t_{12}$ or time $t_{13}$. That is, at time $t_{12}$ or time $t_{13}$, the UE may know based on the COT information that RB set # 2 and RB set # 3 are included in the COT. As illustrated in FIG. 21, time $t_{12}$ and time $t_{13}$ are after the time when the UE plans to start performing Type1 channel access, that is, at the time when the UE plans to start performing Type1 channel access, the UE has not yet obtained the time-frequency information of the COT, and in this case, the UE may perform Type1 channel access as scheduled on RB set # 0 to RB set # 3.

In S213, the UE performs Type2 channel access/LBT on RB set # 2 and RB set # 3.

For the above case # 11, the UE may wait until time $t_2$ before the slot n to start performing Type2 channel access on RB set # 2 and RB set # 3.

For the above case # 12, it is assumed that the time at which the UE acquires the COT information is time $t_{12}$. As illustrated in FIG. 21, at time $t_{12}$, the UE has started performing Type1 channel access/channel sensing, then at time $t_{12}$, the UE may stop Type1 channel access/channel sensing on RB set # 2 and RB set # 3, and may discard part/all of the acquired Type1 channel sensing results. The UE may wait until time $t_2$ before the slot n and start performing Type2 channel access on RB set # 2 and RB set # 3.

For the above case # 12, it is assumed that the time at which the UE acquires the COT information is time $t_{13}$. As illustrated in FIG. 21, the time interval between time $t_{13}$ and the slot n is insufficient to perform the Type2 channel access procedure, that is, the UE has no sufficient time to perform the Type2 channel access procedure before the slot n regardless of whether the UE continues to perform Type1 channel sensing, so in this case, the UE may proceed with the Type 1 channel access already performed.

In S214, the UE transmits the S-SSB in the slot n.

For any one RB set among RB set # 0 to RB set # 3, if the UE successfully perform channel assess on the RB set, the UE may transmit the S-SSB on the RB set, and the slot in which the S-SSB is transmitted is the slot n. For example, if the UE successfully perform channel assess on RB set # 0, the UE may transmit the S-SSB on RB set # 0. For another example, if the UE successfully perform channel assess on RB set # 2, the UE may transmit the S-SSB on RB set # 2.

It should be understood that "RB set" in the scheme illustrated in FIG. 21 may also be replaced with "channels".

Second scheme

It is assumed that a set of channels (or RB sets) scheduled by a UE for transmitting S-SSB in the slot n (corresponding to the first slot in the foregoing embodiments) includes C channels.

In the second scheme, the UE may arbitrarily select one channel $C_i$ from non-anchor channels to adopt the Type1 channel access mode (that is, arbitrarily select one RB set from non-anchor RB sets to adopt the Type1 channel access mode). Other channels (RB sets) adopt the Type2 channel access mode.

In a case where the UE uses Type1 channel access on the channel $C_i$, when the UE acquires COT information (time-frequency information of the COT), if the COT includes a slot n on the channel $C_i$ in which the S-SSB is to be transmitted, the UE may change to use the Type2 (2A, 2B, or 2C) channel access mode on the channel $C_i$ before the slot n.

The use of Type1 channel access may include, for example, the following two cases.

Case # 3: Type1 channel access is scheduled to be used, but channel sensing has not been implemented.

Case # 4: The channel sensing procedure for Type1 channel access has been started.

For the above case # 3, that is, the UE plans to use Type1 channel access on the channel $C_i$, but has not performed channel sensing. In this case, at the originally-scheduled (planned) time to start Type 1 channel access, the UE does not perform Type1 channel access, but wait until before the slot n to perform Type2 channel access.

For the above case # 4, that is, the UE has started performing the channel sensing procedure of Type1 channel access on the channel $C_i$. In this case, the UE may switch to the Type2 (2A, 2B, or 2C) channel access mode.

For example, in the process of performing Type1 channel access on the channel $C_i$, if the UE acquires COT information at time $t_1$ (corresponding to the first time in the foregoing embodiments), the UE may stop Type1 channel access/channel sensing at time $t_1$, and start to perform Type2 (2A, 2B, or 2C) channel access/channel sensing at time $t_2$ before the slot n. The UE may ignore the acquired Type1 channel sensing result (part/ all of the channel sensing results).

In some scenarios, for the above case # 4, if the time interval (remaining time length) between time $t_1$ (the time when the UE obtains COT information) and the slot n is insufficient to perform the Type2 (2A, 2B, or 2C) channel access procedure, the UE may continue to perform and complete the Type1 channel access procedure currently being implemented, and access the channel using the Type1 channel sensing result (if successful).

In some embodiments, for case # 3 and/or case # 4 described above, if the UE successfully performs channel access on a certain channel, the UE may transmit the S-SSB on the channel, and the slot for transmitting the S-SSB is the slot n. That is, channel access on each channel can be performed independently, without depending on whether channel access on the channel $C_i$ is successful.

In some embodiments, for case # 3 and/or case # 4 described above, only when channel access on the channel $C_i$ is successful, it can be determined whether other channels can be accessed and used for transmitting the S-SSB according to their respective channel access results. That is, whether other channels are available for transmitting the S-SSB in the slot n depends on whether channel access on the channel $C_i$ is successful, and if channel access on the channel $C_i$ fails, none of the C channels can be used for S-SSB transmission.

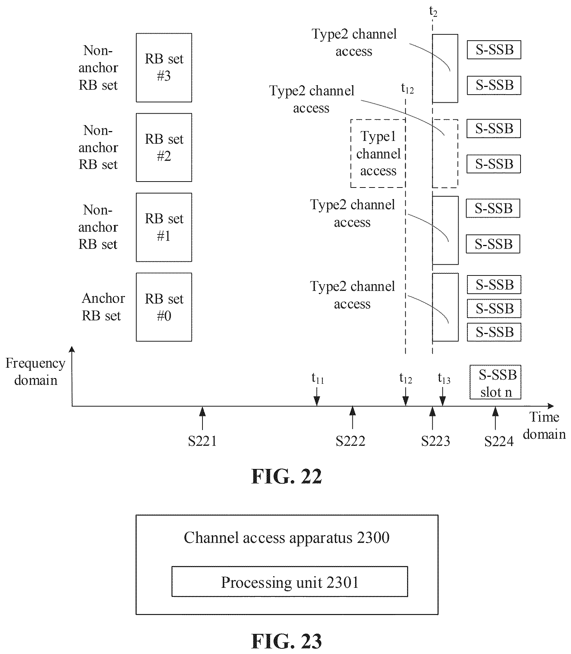

For ease of understanding, FIG. 22 illustrates an example of the second scheme. In FIG. 22, it is assumed that the multi-channel access mode the UE plans to adopt is TypeB multi-channel access. The flow illustrated in FIG. 22 may include the following operations in S221 to S224.

In S221, the UE plans/decides that frequency domain resources for transmitting S-SSB in slot n (S-SSB slot n) include RB set # 0, RB set # 1, RB set # 2, and RB set # 3, and may determine the number of repeated S-SSBs to be transmitted on each RB set, and the interval between adjacent S-SSBs in one RB set, etc. RB set # 0 is an anchor RB set, and RB set # 1, RB set # 2, and RB set # 3 are non-anchor RB sets.

In S222, the UE performs Type1 channel access/LBT on RB set # 2.

In the present embodiment, for example, the UE may plan to adopt the Type1 channel access mode on RB set # 2 and adopt the Type2 channel access mode on other RB sets.

In one possible case (denoted as case # 21), the time at which the UE acquires COT information is time $t_{11}$. That is, at time $t_{11}$, the UE may know based on the COT information that RB set # 2 and RB set # 3 are included in the COT. As illustrated in FIG. 22, time $t_{11}$ is prior to the time when Type1 channel access starts to be performed as scheduled, i.e., at time $t_{11}$, the UE has not yet started performing Type1 channel access on RB set # 2 as scheduled. In this case, at the time when Type1 channel access starts to be performed as scheduled, the UE does not perform Type1 channel access on RB set # 2.

In another possible case (denoted as case # 22), the time at which the UE acquires COT information is time $t_{12}$ or time $t_{13}$. That is, at time $t_{12}$ or time $t_{13}$, the UE may know based on the COT information that RB set # 2 and RB set # 3 are included in the COT. As illustrated in FIG. 22, time $t_{12}$ and time $t_{13}$ are after the time when the UE plans to start performing Type1 channel access, that is, at the time when the UE plans to start performing Type1 channel access, the UE has not yet obtained the time-frequency information of the COT, and in this case, the UE may perform Type1 channel access as scheduled on RB set # 2.

In S223, the UE performs Type2 channel access/LBT.

For the above case # 21, the UE may wait until time $t_2$ before the slot n to start performing Type2 channel access on RB set # 0 to RB set # 3.

For the above case # 22, it is assumed that the time at which the UE acquires the COT information is time $t_{12}$. As illustrated in FIG. 22, at time $t_{12}$, the UE has started performing Type1 channel access/channel sensing on RB set # 2, then at time $t_{12}$, the UE may stop Type1 channel access/channel sensing on RB set # 2, and may discard part/all of the acquired Type1 channel sensing results. The UE may wait until time $t_2$ before the slot n and start performing Type2 channel access on RB set # 0 to RB set # 3.

For the above case # 22, it is assumed that the time at which the UE acquires the COT information is time $t_{13}$. As illustrated in FIG. 21, the time interval between time $t_{13}$ and the slot n is insufficient to perform the Type2 channel access procedure, so in this case, the UE may continue to complete the Type1 channel access on RB set # 2. The UE may start performing Type2 channel access at time $t_2$ as scheduled on RB set # 0, RB set # 1, and RB set # 3.

In S224, the UE transmits the S-SSB in the slot n.

In some embodiments, for case # 21 and/or case # 22 described above, if the UE successfully performs channel access on a certain RB set, the UE may transmit the S-SSB on the channel, and the slot for transmitting the S-SSB is the slot n. That is, channel access on each RB set can be performed independently, without depending on whether channel access on RB set # 2 is successful.

In some embodiments, for case # 21 and/or case # 22 described above, only when channel access on RB set # 2 is successful, it can be determined whether other RB sets can be accessed and used for transmitting the S-SSB according to their respective channel access results. That is, whether other channels are available for transmitting the S-SSB in the slot n depends on whether channel access on RB set # 2 is successful, and if channel access on RB set # 2 fails, none of RB sets # 0 to RB sets # 3 can be used for S-SSB transmission.

It should be understood that "RB set" in the scheme illustrated in FIG. 22 may also be replaced with "channels".

According to the channel access method provided by the embodiments of the present disclosure, when the UE adopts the multi-channel access mechanism, if the UE acquires time-frequency information of COT in the case of having a channel access type plan, the UE may determine whether to switch to a new channel access type (for example, switch from Type1 channel access to Type2 channel access) according to the time when the time-frequency information of the COT is acquired and the remaining time before transmitting the S-SSB. If there is an association between channels scheduled for multi-channel access, the association may automatically disappear after switching to a new channel access type, or the association may still exist. The method improves the probability of channel access by switching channel access types, while maintaining the existing COT resources to avoid preemption by users of different system, thereby ensuring the reliability of sidelink resources in unlicensed frequency band.

The preferred embodiments of the present disclosure have been described in detail above with reference to the accompanying drawings, but the present disclosure is not limited to the specific details in the above embodiments. Within the scope of the technical concept of the present disclosure, various simple modifications may be made to the technical solutions of the present disclosure, and these simple modifications all fall within the scope of protection of the present disclosure. For example, various specific technical features described in the above specific embodiments may be combined in any suitable manner without contradiction, and various possible combinations will not be described separately in the present disclosure in order to avoid unnecessary repetition. For another example, various different embodiments of the present disclosure may be combined arbitrarily as long as the combination does not depart from the idea of the present disclosure, and the combination should also be regarded as the contents of the present disclosure. For another example, various embodiments and/or technical features of the various embodiments in the present disclosure may be combined with the related art in any manner without conflict, and the resulting technical solutions shall also fall within the scope of protection of the present disclosure.

It should also be understood that in various method embodiments of the present disclosure, a magnitude of a sequence number of each process does not mean an execution sequence and the execution sequence of each process should be determined by its function and an internal logic and should not form any limit to an implementation process of the embodiments of the present disclosure. Furthermore, in the embodiments of the present disclosure, the terms "downlink", "uplink" and "sidelink" are used to indicate a direction of transmission of signals or data, "downlink" is used to indicate that the signal or data is transmitted in a first direction from a station to UE of a cell, "uplink" is used to indicate that the signal or data is transmitted in a second direction from UE of a cell to a station, and "sidelink" is used to indicate that the signal or data is transmitted in a third direction from UE 1 to UE 2. For example, "downlink signal" indicates that the signal is transmitted in the first direction. Further, in the embodiments of the present disclosure, the term "and/or" is only an association relationship describing associated objects and represents that three relationships may exist. Specifically, A and/or B may represent three conditions: i.e., independent existence of A, existence of both A and B, and independent existence of B. In addition, character "/" in the present disclosure usually represents that previous and next associated objects form an "or" relationship.

Based on the foregoing embodiments, the embodiments of the present disclosure provide a corresponding channel access apparatus.

FIG. 23 is a schematic diagram of structure and composition of a channel access apparatus according to an embodiment of the present disclosure, which is applied to a first terminal. As illustrated in FIG. 23, the channel access apparatus 2300 (hereinafter simply referred to as the apparatus 2300) includes a processing unit 2301.

The processing unit 2301 is configured to perform Type2 channel access on at least one first channel in a set of channels. A channel access result obtained by performing the Type2 channel access on the at least one first channel is used to determine whether the at least one first channel is available for transmitting an S-SSB in a first slot. The set of channels are channels scheduled for transmitting the S-SSB in the first slot, and the at least one first channel and the first slot are included in a COT.

In some embodiments, the processing unit 2301 is further configured to, if execution of Type1 channel access on all or part of the at least one first channel has been started at first time, stop execution of the Type1 channel access at the first time. The first time is a time instant when time-frequency information of the COT is acquired.

In some embodiments, the processing unit 2301 is further configured to, if execution of Type1 channel access on all or part of the at least one first channel has not been started at first time, not perform the Type1 channel access. The first time is a time instant when time-frequency information of the COT is acquired.

In some embodiments, before the first time, a channel access mode scheduled to be used for all or part of the first channels is Type1 channel access.

In some embodiments, all or part of the first channels are non-anchor channels in the set of channels.

In some embodiments, the processing unit 2301 is further configured to perform Type1 channel access on at least one second channel in the set of channels. The COT does not include the at least one second channel. The channel access result obtained by performing Type1 channel access on the at least one second channel is used to determine whether the at least one second channel is available for S-SSB transmission in the first slot.

In some embodiments, the at least one second channel is a non-anchor channel(s) in the set of channels.

In some embodiments, the processing unit 2301 is further configured to perform Type2 channel access on at least one third channel in the set of channels. The COT does not include at least one second channel. The channel access result obtained by performing Type2 channel access on the at least one third channel is used to determine whether the at least one third channel is available for transmitting the S-SSB in the first slot.

In some embodiments, the processing unit 2301 is further configured to, if execution of Type1 channel access on a target first channel has been started at first time, stop execution of the Type1 channel access at the first time. The target first channel is one of the at least one first channel, and the first time is a time instant when time-frequency information of the COT is acquired.

In some embodiments, the processing unit 2301 is further configured to, if execution of Type1 channel access on a target first channel has not been started at first time, not perform the Type1 channel access. The target first channel is one of the at least one first channel, and the first time is a time instant when time-frequency information of the COT is acquired.

In some embodiments, before the first time, a channel access mode scheduled to be used for the target first channel is Type1 channel access.

In some embodiments, the target first channel is a non-anchor channel in the set of channels.

In some embodiments, the channel access result obtained by performing the Type2 channel access on the at least one first channel includes a first channel access result obtained by performing Type2 channel access on the target first channel. When the first channel access result is successful, the channel access result obtained by performing the Type2 channel access on the at least one first channel is used to determine whether the at least one first channel is available for transmitting the S-SSB in the first slot.

In some embodiments, the processing unit 2301 is further configured to perform Type2 channel access on at least one fourth channel in the set of channels. The COT does not include the at least one fourth channel, and when the first channel access result is successful, the channel access result obtained by performing Type2 channel access on the at least one fourth channel is used to determine whether the at least one fourth channel is available for transmitting the S-SSB in the first slot.

In some embodiments, the set of channels are not used to transmit the S-SSB in the first slot when the first channel access result is a failure.

In some embodiments, the processing unit 2301 is further configured to perform Type2 channel access on at least one fourth channel in the set of channels. The COT does not include the at least one fourth channel. The channel access result obtained by performing Type2 channel access on the at least one fourth channel is used to determine whether the at least one fourth channel is available for transmitting the S-SSB in the first slot.

In some embodiments, a time interval between the first time and the first slot is greater than or equal to a duration required for performing Type2 channel access.

In some embodiments, the processing unit 2301 is further configured to determine whether a time interval between the first time and the first slot is greater than or equal to a duration required for performing Type2 channel access.

In some embodiments, the apparatus 2300 further includes a communication unit. The communication unit is configured to receive first information from a second terminal. The first information is used for sharing the COT with the apparatus 2300, the first information includes time-frequency information of the COT, and the COT is initiated by the second terminal.

Those skilled in the art will appreciate that the above relevant description of the channel access apparatus in the embodiments of the present disclosure may be understood with reference to the relevant description of the channel access method in the embodiments of the present disclosure.

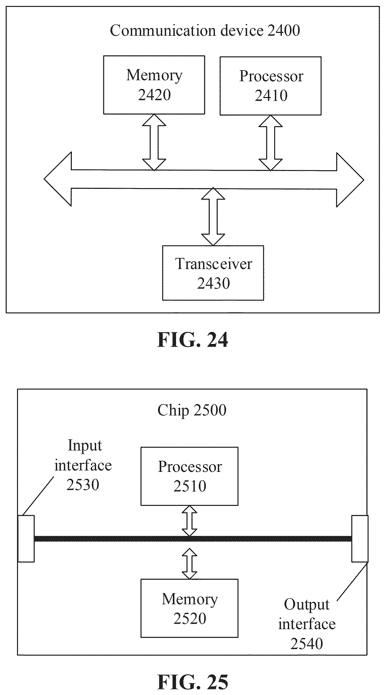

FIG. 24 is a schematic structural diagram of a communication device 2400 according to an embodiment of the present disclosure. The communication device 2400 illustrated in FIG. 24 includes a processor 2410, and the processor 2410 may call and run a computer program from a memory to implement the method in the embodiments of the present disclosure.

In an embodiment, as illustrated in FIG. 24, the communication device 2400 may further include a memory 2420. The processor 2410 may call and run a computer program from the memory 2420 to implement the method in the embodiments of the present disclosure.

The memory 2420 may be a separate device independent of the processor 2410 or may be integrated into the processor 2410.

In an embodiment, as illustrated in FIG. 24, the communication device 2400 may further include a transceiver 2430. The processor 2410 may control the transceiver 2430 to communicate with other devices, in particular, to send information or data to other devices, or receive information or data sent by other devices.

The transceiver 2430 may include a transmitter and a receiver. The transceiver 2430 may further include an antenna(s), the number of which may be one or more.

The communication device 2400 may specifically be a terminal (such as, the first terminal) in the embodiments of the present disclosure, and the communication device 2400 may implement corresponding flows implemented by the terminal (such as, the first terminal) in each method of the embodiments of the present disclosure, which will not be repeated here for the sake of brevity.

FIG. 25 is a schematic structural diagram of a chip according to an embodiment of the present disclosure. The chip 2500 illustrated in FIG. 25 includes a processor 2510, and the processor 2510 may call and run a computer program from a memory to implement the method in the embodiments of the present disclosure.

In an embodiment, as illustrated in FIG. 25, the chip 2500 may further include a memory 2520. The processor 2510 may call and run a computer program from the memory 2520 to implement the method in the embodiments of the present disclosure.

The memory 2520 may be a separate device independent of the processor 2510 or may be integrated into the processor 2510.

In an embodiment, the chip 2500 may further include an input interface 2530. The processor 2510 may control the input interface 2530 to communicate with other devices or chips, specifically, may acquire information or data transmitted by other devices or chips.

In an embodiment, the chip 2500 may further include an output interface 2540. The processor 2510 may control the output interface 2540 to communicate with other devices or chips, specifically, may output information or data to other devices or chips.

The chip may be applied to the terminal (such as, the first terminal) in the embodiments of the present disclosure, and the chip may implement the corresponding flows implemented by the terminal (such as, the first terminal) in each method of the embodiments of the present disclosure, which will not be repeated here for the sake of brevity.

It should be understood that the chip mentioned in the embodiments of the present disclosure may also be referred to as a system-level chip, a system chip, a chip system, or a System on Chip (SOC) chip, etc.

It should be understood that the processor in the embodiments of the present disclosure may be an integrated circuit chip with a signal processing capability. During implementation, each operation of the above method embodiments may be completed by an integrated logic circuit of hardware in the processor or an instruction in form of software. The processor may be a general-purpose processor, a Digital Signal Processor (DSP), an Application Specific Integrated Circuit (ASIC), a Field Programmable Gate Array (FPGA), or another programmable logical device, discrete gate or transistor logical device and discrete hardware component. Each method, operation and logical block diagram disclosed in the embodiments of the present disclosure may be implemented or executed. The general-purpose processor may be a microprocessor or the processor may also be any conventional processor and the like. The operations of the method disclosed in combination with the embodiments of the present disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or an electrically erasable programmable memory, and a register. The storage medium is located in a memory, and the processor reads information in the memory, and completes operations of the above method in combination with hardware thereof.

It is to be understood that the memory in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a 0Double Data Rate SDRAM (DDR SDRAM), an Enhanced SDRAM (ESDRAM), a Synchlink DRAM (SLDRAM) and a Direct Rambus RAM (DR RAM). It is to be noted that the memory described in the present disclosure is intended to include, but not limited to, memories of these and any other proper types.

It is to be understood that the above memory is exemplarily but unlimitedly described. For example, the memory in the embodiments of the present disclosure may also be an SRAM, a DRAM, an SDRAM, a DDR SDRAM, an ESDRAM, an SLDRAM and a DR RAM. That is, the memory in the embodiments of the present disclosure is intended to include but not limited to memories of these and any other proper types.

The embodiments of the present disclosure also provide a computer-readable storage medium for storing a computer program. The computer-readable storage medium may be applied to the terminal (such as, the first terminal) in the embodiments of the present disclosure, and the computer program causes a computer to execute corresponding flows implemented by the terminal (such as, the first terminal) in each method of the embodiments of the present disclosure, which will not be repeated here for the sake of brevity.

The embodiments of the present disclosure also provide a computer program product including computer program instructions. The computer program product may be applied to the terminal (such as, the first terminal) in the embodiments of the present disclosure, and the computer program instruction causes a computer to execute corresponding flows implemented by the terminal (such as, the first terminal) in each method of the embodiments of the present disclosure, which will not be repeated here for the sake of brevity.

The embodiments of the present disclosure also provide a computer program. The computer program may be applied to the terminal (such as, the first terminal) in the embodiments of the present disclosure, and the computer program, when run on a computer, causes the computer to execute corresponding flows implemented by the terminal (such as, the first terminal) in each method of the embodiments of the present disclosure, which will not be repeated here for the sake of brevity.

Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific working processes of the system, apparatus and unit described above may refer to the corresponding processes in the method embodiments and will not be elaborated herein for convenient and brief description.

In some embodiments provided by the present disclosure, it is to be understood that the disclosed system, apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct

24

coupling or communication connection between displayed or discussed components may be indirect coupling or communication connection, implemented through some interfaces, of the apparatus or the units, and may be electrical, mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

**Claims**

1. A channel access method, applied to a first terminal, the method comprising:

   performing Type2 channel access on at least one first channel in a set of channels, a channel access result obtained by performing the Type2 channel access on the at least one first channel being used to determine whether the at least one first channel is available for transmitting a sidelink synchronization signal block (S-SSB) in a first slot;
   wherein the set of channels are channels scheduled for transmitting the S-SSB in the first slot, and the at least one first channel and the first slot are included in a channel occupancy time (COT).

2. The method of claim 1, further comprising:
   if execution of Type1 channel access on all or part of the at least one first channel has been started at first time, stopping execution of the Type1 channel access at the first time, wherein the first time is a time instant when time-frequency information of the COT is acquired.

3. The method of claim 1, further comprising:
   if execution of Type1 channel access on all or part of the at least one first channel has not been started at first time, not performing the Type1 channel access, wherein the first time is a time instant when time-frequency information of the COT is acquired.

4. The method of claim 2 or 3, wherein before the first time, a channel access mode scheduled to be used for all or part of the first channels is the Type1 channel access.

5. The method of any one of claims 2 to 4, wherein all or part of the first channels are non-anchor channels in the set of channels.

6. The method of any one of claims 1 to 5, further comprising:

   performing Type1 channel access on at least one second channel in the set of channels;
   wherein the COT does not comprise the at least one second channel, and
   a channel access result obtained by performing Type1 channel access on the at least one second channel is used to determine whether the at least one second channel is available for transmitting the S-SSB in the first slot.

7. The method of claim 6, wherein the at least one second channel is at least one non-anchor channel in the set of channels.

8. The method of any one of claims 1 to 7, further comprising:

   performing Type2 channel access on at least one third channel in the set of channels;
   wherein the COT does not comprise the at least one second channel, and
   a channel access result obtained by performing Type2 channel access on the at least one third channel is used to determine whether the at least one third channel is available for transmitting the S-SSB in the first slot.

9. The method of claim 1, further comprising:

   if execution of Type1 channel access on a target first channel has been started at first time, stopping execution of the Type1 channel access at the first time;
   wherein the target first channel is one of the at least one first channel, and the first time is a time instant when time-frequency information of the COT is acquired.

10. The method of claim 1, further comprising:

    if execution of Type1 channel access on a target first channel has not been started at first time, not performing the Type1 channel access;
    wherein the target first channel is one of the at least one first channel, and the first time is a time instant when time-frequency information of the COT is acquired.

11. The method of claim 9 or 10, wherein before the first time, a channel access mode scheduled to be used for the target first channel is the Type1 channel access.

12. The method of any one of claims 9 to 11, wherein the target first channel is a non-anchor channel in the set of channels.

13. The method of any one of claims 9 to 12, wherein the channel access result obtained by performing the Type2 channel access on the at least one first channel comprises: a first channel access result obtained by performing Type2 channel access on the target first channel;
    in a case where the first channel access result is successful, the channel access result obtained by performing the Type2 channel access on the at least one first channel is used to determine whether the at least one first channel is available for transmitting the S-SSB in the first slot.

14. The method of claim 13, further comprising:

    performing Type2 channel access on at least one fourth channel in the set of channels;
    wherein the COT does not comprise the at least one fourth channel, and
    in a case where the first channel access result is successful, a channel access result obtained by performing Type2 channel access on the at least one fourth channel is used to determine whether the at least one fourth channel is available for transmitting the S-SSB in the first slot.

15. The method of claim 13 or 14, wherein in a case where the first channel access result is a failure, the set of channels are not used to transmit the S-SSB in the first slot.

16. The method of any one of claims 9 to 12, further comprising:

    performing Type2 channel access on at least one fourth channel in the set of channels;
    wherein the COT does not comprise the at least one fourth channel, and
    a channel access result obtained by performing Type2 channel access on the at least one fourth channel is used to determine whether the at least one fourth channel is available for transmitting the S-SSB in the first slot.

17. The method of any one of claims 2 to 5, 9 to 16, wherein a time interval between the first time and the first slot is greater than or equal to a duration required for performing Type2 channel access.

18. The method of any one of claims 2 to 5, 9 to 17, further comprising:

determining whether a time interval between the first time and the first slot is greater than or equal to a duration required for performing Type2 channel access.

19. The method of any one of claims 1 to 18, further comprising:

receiving first information from a second terminal, wherein the first information is used for sharing the COT with the first terminal, the first information comprises time-frequency information of the COT, and the COT is initiated by the second terminal.

20. A channel access apparatus, comprising:

a processing unit, configured to perform Type2 channel access on at least one first channel in a set of channels, a channel access result obtained by performing the Type2 channel access on the at least one first channel being used to determine whether the at least one first channel is available for transmitting a sidelink synchronization signal block (S-SSB) in a first slot;

wherein the set of channels are channels scheduled for transmitting the S-SSB in the first slot, and the at least one first channel and the first slot are included in a channel occupancy time (COT).

21. The apparatus of claim 20, wherein the processing unit is further configured to, if execution of Type1 channel access on all or part of the at least one first channel has been started at first time, stop execution of the Type1 channel access at the first time;

wherein the first time is a time instant when time-frequency information of the COT is acquired.

22. The apparatus of claim 20, wherein the processing unit is further configured to, if execution of Type1 channel access on all or part of the at least one first channel has not been started at first time, not perform the Type1 channel access;

wherein the first time is a time instant when time-frequency information of the COT is acquired.

23. The device of claim 21 or 22, wherein before the first time, a channel access mode scheduled to be used for all or part of the first channels is the Type1 channel access.

24. The apparatus of any one of claims 21 to 23, wherein all or part of the first channels are non-anchor channels in the set of channels.

25. The apparatus of any one of claims 20 to 24, wherein the processing unit is further configured to perform Type1 channel access on at least one second channel in the set of channels;

wherein the COT does not comprise the at least one second channel, and
a channel access result obtained by performing Type1 channel access on the at least one second channel is used to determine whether the at least one second channel is available for transmitting the S-SSB in the first slot.

26. The apparatus of claim 25, wherein the at least one second channel is at least one non-anchor channel in the set of channels.

27. The apparatus of any one of claims 20 to 26, wherein the processing unit is further configured to perform Type2 channel access on at least one third channel in the set of channels;

wherein the COT does not comprise the at least one second channel, and
a channel access result obtained by performing Type2 channel access on the at least one third channel is used to determine whether the at least one third channel is available for transmitting the S-SSB in the first slot.

28. The apparatus of claim 20, wherein the processing unit is further configured to, if execution of Type1 channel access on a target first channel has been started at first time, stop execution of the Type1 channel access at the first time;
wherein the target first channel is one of the at least one first channel, and the first time is a time instant when time-frequency information of the COT is acquired.

29. The apparatus of claim 20, wherein the processing unit is further configured to, if execution of Type1 channel access on a target first channel has not been started at first time, not perform the Type1 channel access;
wherein the target first channel is one of the at least one first channel, and the first time is a time instant when time-frequency information of the COT is acquired.

30. The apparatus of claim 28 or 29, wherein before the first time, a channel access mode scheduled to be used for the target first channel is the Type1 channel access.

31. The apparatus of any one of claims 28 to 30, wherein the target first channel is a non-anchor channel in the set of channels.

32. The apparatus of any one of claims 28 to 31, wherein the channel access result obtained by performing the Type2 channel access on the at least one first channel comprises: a first channel access result obtained by performing Type2 channel access on the target first channel;
in a case where the first channel access result is successful, the channel access result obtained by performing the Type2 channel access on the at least one first channel is used to determine whether the at least one first channel is available for transmitting the S-SSB in the first slot.

33. The apparatus of claim 32, wherein the processing unit is further configured to perform Type2 channel access on at least one fourth channel in the set of channels;

    wherein the COT does not comprise the at least one fourth channel, and
    in a case where the first channel access result is successful, a channel access result obtained by performing Type2 channel access on the at least one fourth channel is used to determine whether the at least one fourth channel is available for transmitting the S-SSB in the first slot.

34. The apparatus of claim 32 or 33, wherein in a case where the first channel access result is a failure, the set of channels are not used to transmit the S-SSB in the first slot.

35. The apparatus of any one of claims 28 to 31, wherein the processing unit is further configured to perform Type2 channel access on at least one fourth channel in the set of channels;

    wherein the COT does not comprise the at least one fourth channel, and
    a channel access result obtained by performing Type2 channel access on the at least one fourth channel is used to determine whether the at least one fourth channel is available for transmitting the S-SSB in the first slot.

36. The apparatus of any one of claims 21 to 24, 28 to 35, wherein a time interval between the first time and the first slot is greater than or equal to a duration required for performing Type2 channel access.

37. The apparatus of any one of claims 21 to 24, 28 to 36, wherein the processing unit is further configured to determine whether a time interval between the first time and the first slot is greater than or equal to a duration required for performing Type2 channel access.

38. The apparatus of any one of claims 20 to 37, further comprising:
a communication unit, configured to receive first information from a second terminal, wherein the first information is used for sharing the COT with a first terminal, the first information comprises time-frequency information of the COT, and the COT is initiated by the second terminal.

39. A terminal, comprising: a processor and a memory for storing a computer program, wherein the processor is configured to call and run the computer program stored in the memory to perform the method of any one of claims 1 to 19.

40. A chip, comprising: a processor, configured to call and run a computer program from a memory, to cause a device installed with the chip to perform the method of any one of claims 1 to 19.

41. A computer readable storage medium, configured for storing a computer program that causes a computer to perform the method of any one of claims 1 to 19.

42. A computer program product, comprising computer program instructions that cause a computer to perform the method of any one of claims 1 to 19.

43. A computer program, causing a computer to perform the method of any one of claims 1 to 19.

Base station
Sidelink
communication

**FIG. 1**

Base station
Sidelink
communication

**FIG. 2**

Sidelink
communication

**FIG. 3**

UE1

Resource allocation

Resource allocation

UE2

UE3

Sidelink communication

**FIG. 4**

UE1

Data

UE2

**FIG. 5**

Group

UE2

UE1

UE3

UE4

**FIG. 6**

UE2

UE6

UE3

UE1

UE5

UE4

**FIG. 7**

| AGC | | | | | PSSCH | | | | | | | | | GP |
| PSCCH |

(a)

| AGC | | | | | PSSCH | | | | | | | GP | PSFCH | GP |
| PSCCH |

(b)

**FIG. 8**

$M_{sc}^{PSSCH}(l)$

$M_{sc}^{PSCCH}(l)$

Slot where PSFCH resources exist

Slot where no PSFCH resource exists

AGC

PSCCH

*n*-th PSSCH transmission

PSFCH and corres- ponding AGC and GAP

G P

AGC

PSCCH

*n+1*-th PSSCH transmission

G P

**FIG. 9**

**FIG. 10**

| | Symbol # 1 | Symbol # 2 | Symbol # 3 |
|---|---|---|---|
| RE#11 | | | |
| RE#10 | | | |
| RE#9 | Reference signal | Reference signal | Reference signal |
| RE#8 | | | |
| RE#7 | | | |
| RE#6 | | | |
| RE#5 | Reference signal | Reference signal | Reference signal |
| RE#4 | | | |
| RE#3 | | | |
| RE#2 | | | |
| RE#1 | Reference signal | Reference signal | Reference signal |
| RE#0 | | | |

**FIG. 11**

| AGC | DMRS | PSCCH | | DMRS | | DMRS | | DMRS | | | GP |
|---|---|---|---|---|---|---|---|---|---|---|---|
| 0 | 1 | 2 | 3 | 4 | 5 | 6 | 7 | 8 | 9 | 10 | 11 | 12 | 13 |

**FIG. 12**

| RE#0 | RE#1 | RE#2 | RE#3 | RE#4 | RE#5 | RE#6 | RE#7 | RE#8 | RE#9 | RE#10 | RE#11 |
|---|---|---|---|---|---|---|---|---|---|---|---|
| Port 0/ Port 1 | | Port 0/ Port 1 | | Port 0/ Port 1 | | Port 0/ Port 1 | | Port 0/ Port 1 | | Port 0/ Port 1 | |

**FIG. 13**

FIG. 14

COT

Channel occupancy

Channel occupancy

LBT success

Time domain

## FIG. 15

RB Set #3

RB Set #2

| S-SSB | S-SSB | S-SSB | S-SSB |
| S-SSB | S-SSB | S-SSB | S-SSB |
| S-SSB | S-SSB | S-SSB | S-SSB |

RB Set #1

| S-SSB | S-SSB | S-SSB | S-SSB |
| S-SSB | S-SSB | S-SSB | S-SSB |
| S-SSB | S-SSB | S-SSB | S-SSB |

RB Set #0

| S-SSB | S-SSB | S-SSB | S-SSB |
| S-SSB | S-SSB | S-SSB | S-SSB |
| S-SSB | S-SSB | S-SSB | S-SSB |

Frequency domain

Time domain

S-SSB    Interval    S-SSB    Interval    S-SSB    Interval    S-SSB

First-type S-SSB

Second-type S-SSB

## FIG. 16

Non-
anchor
RB set | Channel #3
(RB set #3) | | Type1 channel
access | | S-SSB | COT
| | | | | S-SSB

Non-
anchor
RB set | Channel #2
(RB set #2) | | Type1 channel
access | | S-SSB
| | | | | S-SSB

Non-
anchor
RB set | Channel #1
(RB set #1) | | Type1 channel
access | | S-SSB
| | | | | S-SSB

Anchor
RB set | Channel #0
(RB set #0) | | Type1 channel
access | | S-SSB
| | | | | S-SSB
| | | | | S-SSB

Frequency
domain

Channel sensing
duration

S-SSB
slot n

Time
domain

Frequency domain resources scheduled
for S-SSB transmission in slot n: RB set #
0, RB set # 1, RB set # 2, and RB set # 3

⇨ Channel
access/LBT ⇨ Transmit
S-SSB

**FIG. 17**

**FIG. 18**

A first terminal performs Type2 channel access on at least one first channel in a set of channels, and a channel access result obtained by performing the Type2 channel access on the at least one first channel is used to determine whether the at least one first channel is available for transmitting S-SSB in a first slot; where the set of channels are channels scheduled for transmitting the S-SSB in the first slot, and the at least one first channel and the first slot are included in a COT — S1901

**FIG. 19**

**FIG. 20**

**FIG. 21**

FIG. 22

FIG. 23

Communication device 2400

Memory
2420

Processor
2410

Transceiver
2430

**FIG. 24**

Chip 2500

Input
interface
2530

Processor
2510

Memory
2520

Output
interface
2540

**FIG. 25**

## INTERNATIONAL SEARCH REPORT

| International application No. |
| --- |
| **PCT/CN2023/141193** |

| A. | CLASSIFICATION OF SUBJECT MATTER |
| --- | --- |
| | H04W74/0836(2024.01)i |

According to International Patent Classification (IPC) or to both national classification and IPC

| B. | FIELDS SEARCHED |
| --- | --- |

Minimum documentation searched (classification system followed by classification symbols)

IPC: H04W, H04L, H04B

Documentation searched other than minimum documentation to the extent that such documents are included in the fields searched

Electronic data base consulted during the international search (name of data base and, where practicable, search terms used)

3GPP, CNTXT, ENTXTC, ENTXT: 同步, 信号块, 终端, 移动站, 移动台, 检测, 监听, 类型2, 先听后说, 信道, 时隙, 信道占用时间, LBT, UE, MS, SSB, S-SSB, synchronization, monitor, listen, detect, type2, channel, slot, COT

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021237607 A1 (GUANGDONG OPPO MOBILE TELECOMMUNICATIONS CORP., LTD.) 02 December 2021 (2021-12-02) claims 1-76, and description, pages 7-10 | 1-43 |
| A | CN 115866758 A (ZTE CORP.) 28 March 2023 (2023-03-28) entire document | 1-43 |
| A | CN 116600410 A (HOU WEI) 15 August 2023 (2023-08-15) entire document | 1-43 |
| A | CN 116963023 A (VIVO MOBILE COMMUNICATION CO., LTD.) 27 October 2023 (2023-10-27) entire document | 1-43 |
| A | WO 2023159484 A1 (GUANGDONG OPPO MOBILE TELECOMMUNICATIONS CORP., LTD.) 31 August 2023 (2023-08-31) entire document | 1-43 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 September 2024** | **14 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/141193**

| Patent document cited in search report | | | Publication date (day/month/year) | Patent family member(s) | | | Publication date (day/month/year) |
|---|---|---|---|---|---|---|---|
| WO | 2021237607 | A1 | 02 December 2021 | US | 2023121866 | A1 | 20 April 2023 |
| | | | | EP | 4161203 | A1 | 05 April 2023 |
| | | | | CN | 115669172 | A | 31 January 2023 |
| CN | 115866758 | A | 28 March 2023 | WO | 2024001713 | A1 | 04 January 2024 |
| CN | 116600410 | A | 15 August 2023 | | None | | |
| CN | 116963023 | A | 27 October 2023 | WO | 2023198046 | A1 | 19 October 2023 |
| WO | 2023159484 | A1 | 31 August 2023 | | None | | |

Form PCT/ISA/210 (patent family annex) (July 2022)